# EUROPÄISCHE PATENTANMELDUNG

(11) **EP 2 087 931 A2**
(43) Veröffentlichungstag der Anmeldung: **12.08.2009**
(21) Anmeldenummer: 08171594.8
(22) Anmeldetag: 15.12.2008
(51) Int. Cl.: B01D 19/04

(54) **Entschäumung von ionischen Flüssigkeiten**

(30) Priorität: 05.02.2008 DE 102008007730
(71) Anmelder: Evonik Goldschmidt GmbH, 45127 Essen (DE)
(72) Erfinder: Schwab, Peter, Dr., 45133 Essen (DE); Mund, Christian, Dr., 45149 Essen (DE); Kugel, Kerstin, 42553 Velbert (DE); Köhle, Hans-Jürgen, Dr., 63533 Mainhausen (DE); Hänsel, Rene, 46282 Dorsten (DE)

(57) **Zusammenfassung**

Die Erfindung betrifft die Entschäumung von ionischen Flüssigkeiten sowie Zusammensetzungen enthaltend mindestens eine ionische Flüssigkeit und mindestens einen Entschäumer und gegebenenfalls ein Lösungsmittel und/oder weitere sonstige Hilfs- oder Zusatzstoffe.

## Beschreibung

### Stand der Technik:

Ionische Flüssigkeiten werden für zahlreiche Anwendungen eingesetzt und vorgeschlagen, bei denen unter Scherkraft Gase, insbesondere Luft oder Stickstoff und andere technische Gase, aber auch beispielsweise Wasserdampf eingetragen werden. Dadurch kommt es zur Schaumbildung, die in vielen Fällen negative Auswirkungen auf die Anwendung(z.B. Materialabnutzung aufgrund erhöhter Reibung) zeigt.

### Aufgabenstellung:

Aufgabe der Erfindung ist es daher, ionische Flüssigkeiten effektiv zu entschäumen und somit für Anwendungen bei denen unter Scherkräften Gas eingetragen werden kann, universell und dauerhaft einsetzbar zu machen.

Dies sind insbesondere Anwendungen in denen die ionischen Flüssigkeiten als Schmier- oder Hydrauliköl Verwendung finden und die eingetragenen und gegebenenfalls gelösten Gase zu einer Verminderung, jedenfalls Verschlechterung der prozessbedingten (schmierenden) Eigenschaften führen.

Nicht umfasst sind ausdrücklich Systeme, bei denen ionische Flüssigkeiten selbst nur in geringen Mengen, z.B. in Beschichtungen oder Pasten/Lacken, Mitverwendung finden, da hier die Schaumbildung nicht auf die ionische Flüssigkeit ursächlich zurückzuführen ist.

Als ionische Flüssigkeiten ("ionic liquids") bezeichnet man allgemein bei niedrigen Temperaturen (< 100 °C) schmelzende Salze, die eine neuartige Klasse von Flüssigkeiten ausschließlich aus Ionen aufgebaut darstellen. Im Gegensatz zu klassischen Salzschmelzen, die hochschmelzende, hochviskose und sehr korrosive Medien darstellen, sind ionische Flüssigkeiten bereits bei niedrigen Temperaturen flüssig und relativ niedrig viskos (K.R. Seddon J. Chem. Technol. Biotechnol. 1997, 68, 351-356). Sie unterscheiden sich insbesondere auch von Wasser, da sie vollständig ionischen Aufbau besitzen.

Überraschenderweise wurde nun gefunden, dass Entschäumer, die für die Vermeidung und Zerstörung von Schaum in wässrigen Systemen verwendet werden, das Problem lösen. Das ist insbesondere überraschend, da Wasser keine Flüssigkeit mit einem ausgeprägten ionischen Charakter darstellt. Umso überraschender war die Erkenntnis, dass insbesondere Entschäumer, die für die Entschäumung von Tensid-stabilisierten wässrigen (nicht-ionischen) Systemen entwickelt worden sind, auch in den wasserfreien (bzw. wasserarmen) hochgradig ionischen Flüssigkeiten eine gute entschäumende Wirkung haben und damit die Aufgabenstellung lösen.

Ionische Flüssigkeiten im Sinne der vorliegenden Erfindungen sind Salze der nachfolgend aufgeführten allgemeinen Formeln I, II, oder III:

[A]ₙ⁺ [Y]ⁿ⁻ (I)

in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht; oder gemischte Salze der allgemeinen Formeln (II)

[A¹]⁺[A²]⁺ [Y]² (IIa);

[A¹]⁺[A²]⁺[A³]⁺ [Y]³⁻ (IIb);

oder

[A¹]⁺[A²]⁺[A³]⁺[A⁴]⁺ [Y]⁴⁻ (IIc),

wobei [A¹]⁺, [A²]⁺ [A³]⁺ und [A⁴]⁺ unabhängig voneinander aus den für [A]⁺ genannten Gruppen ausgewählt sind und [Y]ⁿ⁻ die für Formel (I) genannte Bedeutung besitzt; oder gemischte Salze der allgemeinen Formeln (III)

[A¹]⁺[A²]⁺[A³]⁺[M¹]⁺ [Y]⁴⁻ (IIIa);

[A¹]⁺[A²]⁺[M¹]⁺[M²]⁺ [Y]⁴⁻ (IIIb);

[A¹]⁺[M¹]⁺[M²]⁺[M³]⁺ [Y]⁴⁻ (IIIc);

[A¹]⁺[A²]⁺[M¹]⁺ [Y]³ (IIId);

[A¹]⁺[M¹]⁺[M²]⁺ [Y]³ (IIIe);

[A¹]⁺[M¹]⁺ [Y]² (IIIf);

[A¹]⁺[A²]⁺[M⁴]²⁺ [Y]⁴⁻ (IIIg);

[A¹]⁺[Ml]⁺[M⁴]²⁺ [Y]⁴⁻ (IIIh);

[A¹]⁺[M⁵]³⁺ [Y]⁴⁻ (IIIi);

oder

[A¹]⁺[M⁴]²⁺ [Y]³ (IIIj)

wobei [A¹]⁺, [A²]⁺ und [A³]⁺ unabhängig voneinander aus den für [A]⁺ genannten Gruppen ausgewählt sind, [Y]ⁿ⁻ die für Formel I genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten;
oder Gemische aus allen Formeln (I)-(III), die frei von Keton-, Keton/Aldehyd- und/oder Harnstoff/Aldehyd-Harzen und/oder deren hydrierten Folgeprodukten sind.

Ionische Flüssigkeiten bestehen bespielsweise aus Anionen wie zum Beispiel Halogeniden, Carboxylaten, Phosphaten, Thiocyanaten, Isothiocyanaten, Dicyanamiden, Sulfaten, Alkylsulfaten, Sulfonaten, Alkylsulfonaten, Tetrafluoroborat, Hexafluoro-phosphat oder auch Bis(trifluormethylsulfonyl)imid kombiniert mit zum Beispiel substituierten Ammonium-, Phosphonium-, Pyridinium-oder Imidazolium-Kationen, wobei die vorgenannten Anionen und Kationen eine kleine Auswahl aus der großen Zahl möglicher Anionen und Kationen darstellen und damit kein Anspruch auf Vollständigkeit erhoben oder gar eine Einschränkung vorgegeben werden soll.

Die erfindungsgemäß verwendeten ionischen Flüssigkeiten setzen sich bevorzugt aus mindestens einer quartären Stickstoff und/oder Phosphorverbindung und/oder Schwefelverbindung und mindestens einem Anion zusammen und ihr Schmelzpunkt liegt unterhalb ca. + 250 °C, vorzugsweise unterhalb ca. + 150 °C, insbesondere unterhalb ca. + 100 °C. Weiterhin sind sie frei von Keton-, Keton/Aldehyd- und/oder Harnstoff/Aldehyd-Harzen und/oder deren hydrierten Folgeprodukten. Besonders bevorzugt sind die erfindungsgemäß verwendeten ionischen Flüssigkeiten oder ihre Mischungen bei Raumtemperatur flüssig.

Die erfindungsgemäßen Zusammensetzungen enthalten 80 bis 99, 999 Gew . -%, bevorzugt 90 bis 99,999 Gew. -%, insbesondere mindestens 95 Gew.-% und besonders bevorzugt mehr als 98 bis 99,999 Gew.-% einer oder mehrerer ionischen Flüssigkeiten,
sowie 0 bis 20 Gew.-%, bevorzugt 0 bis 10 Gew.-% und besonders bevorzugt 0 bis 5 Gew.-% Lösungsmittel,
sowie 0 bis 20 Gew.-%, bevorzugt 0 bis 10 Gew.-% und besonders bevorzugt 0 bis 5 Gew. -% an Hilfs- und Zusatzstoffen,
sowie 0,001 bis 10 Gew.-%, bevorzugt 0,001 bis 5 Gew.-% und besonders bevorzugt 0,05 bis 1 Gew.-% eines oder mehrerer erfindungsgemäßer Entschäumer,
wobei sich die Summe aller Komponenten der Zusammensetzung auf 100 Gew.-% addiert.

Die im Sinne der Erfindung bevorzugt verwendeten ionischen Flüssigkeiten können beispielsweise aus mindestens einem Kation bestehen der allgemeinen Formeln:

R¹R²R³R⁴N⁺ (IV)

R¹R²N⁺=CR³R⁴ (V)

R¹R²R³R⁴P⁺ (VI)

R¹R²P⁺=CR³R⁴ (VII)

R¹R²R³S⁺ (VIII)

in denen R¹,R²,R³,R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S (O₂)-O-, -O-S(O₂)-, -S(O₂)-NH-, -NH-S(O₂)-, -S (O₂) -N (CH₃) -, -N(CH₃)-S(O₂)-, u n t erbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeuten, wobei R⁵ ein 2 bis 4 Kohlenstoffatome enthaltender linearer oder verzweigter Kohlenwasserstoffrest, n 1 bis 100, vorzugsweise 2 bis 60, ist und R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Bevorzugt werden quarternäre Ammoniumsalze alkoxylierter Fettsäuren - auch als Alkanolaminesterquats bezeichnet - gekennzeichnet durch die generische Formel des Typs R¹R²R³R⁴N⁺ A⁻ (IV) in denen R¹ ein Alkylrest mit 1 bis 20 Kohlenstoffatomen, R² ein Alkylrest mit 1 bis 4 Kohlenstoffatomen, R³ ein Rest (CH₂CHRO)ₙ-H mit n von 1 bis 200 und R gleich H oder CH₃, R⁴ ein Alkylrest mit 1 bis 4 Kohlenstoffatomen oder ein Rest (CH₂CHRO)ₙ-H mit n von 1 bis 200 und R gleich H oder CH₃ und A⁻ ein einwertiges Anion ist.

### Bei diesen Verbindungen sind Substanzen der Formel

(i)

   R⁶₄₋ₘN⁺[((CH₂)ₙ-Q-R⁷]ₘ X⁻

   bevorzugt, wobei: jeder Rest R⁶ unabhängig voneinander ein Alkylgruppe oder Hydroxyalkylgruppe mit 1 bis 6 Kohlenstoffatomen, oder eine Benzylgruppe, und vorzugsweise eine Methylgruppe ist; R⁷ ist unabhängig voneinander Wasserstoff, eine lineare oder verzweigte Alkylgruppe mit 11 bis 22 Kohlenstoffatomen, eine lineare oder verzweigte Alkenylgruppe mit 11 bis 22 Kohlenstoffatomen, mit der Bedingung dass mindestens ein Rest R⁷ nicht Wasserstoff ist;
   Q ist unabhängig ausgewählt aus den Gruppen der Formeln -O-C O)-, -C(O)O, -NR⁸-C(O)-, -C(O)-NR⁸-, -O-C(O)-O, -CHR⁹-O-C(O)- oder -CH(OCOR⁷)-CH₂-O-C(O)-, wobei R⁸ Wasserstoff, Methyl, Ethyl, Propyl- oder Butylrest ist und R⁹ ist Wasserstoff oder Methyl ist und vorzugsweise Q ist -O-C(O)- oder -NH-C(O)-; m ist gleich 1 bis 4 und vorzugsweise 2 oder 3; n ist gleich 1 bis 4 und vorzugsweise 2; und X ein mit Weichmachern kompatibles Anion, z.B. Chlorid, Bromid, Methylsulfat, Ethylsulfat, Sulfat oder Nitrat, vorzugsweise Chlorid oder MethylSulfat. Die quaternäre Ammonium-Verbindungen kann Gemische der Verbindungen mit unterschiedlichen Gruppen R⁷ enthalten die nicht gleich Wasserstoff sind, deren Wert von 1 bis zu m reicht. Vorzugsweise umfassen solche Gemische auf Durchschnitt von 1.2 bis 2.5 Gruppen R⁷, die nicht Wasserstoff sind. Vorzugsweise liegt der Anteil der Nicht-Wasserstoffgruppen R⁷ bei 1,4 bis 2,0 und bevorzugt bei 1,6 bis 1,9. Die bevorzugten quarternären Ammoniumverbindungen sind die Verbindungen des Typs:
(ii)

   R⁶N⁺[CH₂CHR⁹OH⁻][CH₂CHR⁹OC(O)R⁷]₂ X⁻
(iii)

   R⁶N⁺[CH₂CHR⁹OC(O)R⁷]₂ X⁻
(iv)

   R⁶N⁺[CH₂CHR⁹OH⁻][CH₂CH₂NHC(O)R⁷]₂ X⁻,
wobei R⁶, R⁷ und X haben die gleiche Bedeutung wie für Formel (i) oben definiert, mit der Bedingung dass R⁷ nicht Wasserstoff ist.
Vorzugsweise ist das Fragment -C(O)R⁷ eine fetthaltige Acylgruppe. Verwendbare fetthaltige Acylgruppen werden von den natürlichen Quellen der Triglyzeride, vorzugsweise Talg, pflanzliche öle, teilweise hydrierter Talg und teilweise hydrierte pflanzliche öle abgeleitet. Verwendbare Quellen der Triglyzeride sind Sojabohnenöl, Talg, partiell hydrierter Talg, Palmöl, Palmekerne, Rapssamen, Schweinefett, Kokosnuss, Raps, Distelöl, Mais, Reis und Tallöl und Mischungen dieser Komponenten.

Dem Fachmann ist bekannt, dass die Zusammensetzung der Fettsäurehaltigen Verbindungen gewissen natürlichen Schwankungen unterworfen ist, abhängig von Erntegut zu Erntegut oder von der Vielzahl der pflanzlichen Ölquellen. Die R⁷-Gruppen sind gewöhnlich Gemische der linearen und verzweigten Kohlenstoffketten der gesättigten und ungesättigten aliphatischen Fettsäuren. Der Anteil der ungesättigten Gruppen R⁷ in solchen Gemischen beträgt vorzugsweise mindestens 10%, besonders bevorzugt mindestens 25% und ganz besonders bevorzugt 40% bis 70%. Der Anteil der mehrfach ungesättigten Gruppen R⁷ in solchen Gemischen beträgt weniger als 10%, vorzugsweise weniger als 5% und besonders bevorzugt weniger als 3%. Wenn erforderlich kann Teilhydrierung durchgeführt werden, um die den gesättigten Charakter anzuheben und damit die Stabilität (z.B., Geruch, Farbe, etc.) des Endprodukts zu verbessern. Das Gehalt ungesättigter Anteile, ausgedrückt durch den Jodzahl, sollte in einem Bereich von 5 bis 150 und vorzugsweise in einem Bereich von bevorzugt 5 bis 50 liegen. Das Verhältnis von cis- und trans-Isomeren der Doppelbindungen in den ungesättigten Gruppen R⁷ ist vorzugsweise größer als 1: 1 und besonders bevorzugt im Bereich von 4 zu 1 bis 50 zu 1.

Bevorzugte Beispiele der Verbindungen von Formel (i) sind:
N,N-Di(tallowyloxyethyl)-N,N-dimethylammonium-chlorid;
N,N-Di(canolyloxyethyl)-N,N-dimethylammonium-chlorid;
N,N-Di(tallowyloxyethyl)-N-methyl,N-(2-hydroxyethyl)ammonium-methylsulfat;
N,N-Di(canolyloxyethyl)-N-methyl,N-(2-hydroxyethyl) ammonium-methylsulfat;
N,N-Di(tallowylamidoethyl)-N-methyl,N-(2-hydroxyethyl) ammonium-methylsulfat;
N,N-Di(2-tallowyloxy-2-oxo-ethyl)-N,N-dimethylammonium-chlorid;
N,N-Di(2-canolyloxy-2-oxo-ethyl)-N,N-dimethylammonium-chlorid;
N,N-Di(2-tallowyloxyethylcarbonyloxyethyl)-N,N-dimethyl-ammonium-chlorid;
N,N-Di(2-canolyloxyethylcarbonyloxyethyl)-N,N-dimethyl-ammonium-chlorid;
N(2-tallowoyloxy-2-ethyl)-N-(2-tallowyloxy-2-oxo-ethyl)-N,N-dimethylammonium-chlorid;
N(2-canolyloxy-2-ethyl)-N(2-canolyloxy-2-oxo-ethyl)-N,N-dimethylammonium-chlorid;
N,N,N-Tri(tallowyloxyäthyl)-N-methylammonium-chlorid;
N,N,N-Tri(canolyloxyäthyl)-N-methylammonium-chlorid;
1,2-Ditallowyloxy-3-N,N,N-trimethylammoniumpropyl-chlorid; und
1,2-Dicanolyloxy-3-N,N,N-trimethylammoniumpropyl-chlorid.

Weiterhin bevorzugte quarternäre Ammoniumsalze sind Ditallowdimethylammonium-chlorid, Ditallowdimethylammonium-methylsulfat, Dimethylammonium-Chlorid der Di (hydriertes-tallow)distearyldimethylammonium-chlorid und Dibehenyldimethylammonium-chlorid.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (IX), (X) und (XI) beschreiben, wobei die heterocyclischen Ringe gegebenenfalls auch mehrere Heteroatome enthalten können. 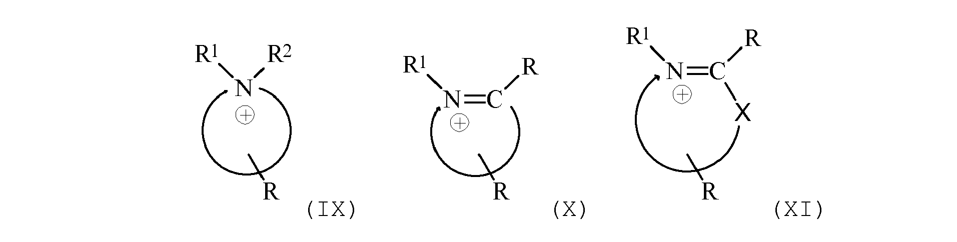
R¹ und R² besitzen dabei die vorgenannte Bedeutung,
R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen X ist ein Sauerstoffatom, ein Schwefelatom oder ein substituiertes Stickstoffatom (X = O, S, NR¹).

Beispiele für cyclische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (IX), (X) und (XI) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen anneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen haben sich als Bestandteil ionischer Flüssigkeiten bewährt.

Als Kationen kommen ferner Ionen in Betracht, welche zwei Stickstoffatome enthalten und durch die allgemeine Formel (XII) wiedergegeben sind 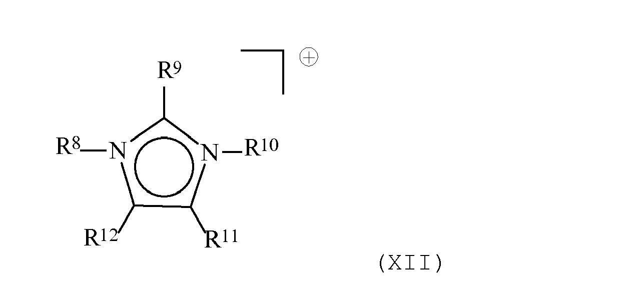 in denen R⁸,R⁹,R¹⁰,R¹¹,R¹² gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S (O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten, wobei R⁵ ein 2 bis 4 Kohlenstoffatome enthaltender Kohlenwasserstoffrest, n 1 bis 100 ist und R⁶ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als ganz besonders bevorzugte Imidazoliumionen (XII) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methylimidazolium, 1-(1-Hexyl)-3-ethyl-imidazolium, 1-(1-Hexyl)-3-butyl-imidazolium, 1-(1-Octyl)-3-methylimidazolium, 1-(1- Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimi-dazolium, 1-(1-Hexadecyl)-3-methylimidazolium, 1-(1-Hexadecyl)-3-ethylimidazolium, 1-(1-Hexadecyl)-3-butylimidazolium, 1-(l-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Di-methyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octyl-imidazolium.

Als Kationen kommen zudem Ionen in Betracht, die insbesondere zusammengesetzt aus den vorgenannten Kationen aufgrund von Dimerisierung, Trimerisierung oder Polymerisierung Dikationen, Trikationen oder Polykationen bilden. Hierunter werden auch solche Dikationen, Trikationen und Polykationen zusammengefasst, die ein polymeres Rückgrat beispielsweise auf Basis von Siloxanen, Polyethern, Polyestern, Polyamiden, oder Polyacrylaten besitzen, insbesondere verzweigte und hyperverzweigte Polymere.

Es kommen ferner ionische Flüssigkeiten in Betracht, bei denen das Kation [A]⁺ ein Pyridiniumion (XIIIa) ist, bei dem 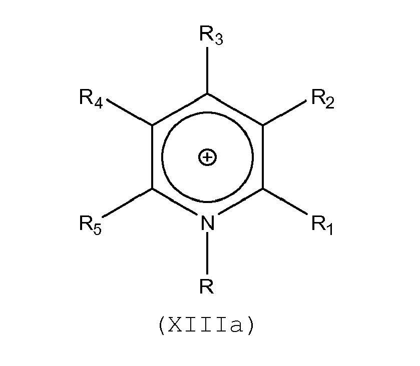 einer der Reste R₁ bis R₅ Methyl, Ethyl oder Chlor ist und die verbleibenden Reste R₁ bis R₅ Wasserstoff sind;
R₃ Dimethylamino ist und die verbleibenden Reste R₁, R₂,
R₄ und R₅ Wasserstoff sind;
alle Reste R₁ bis R₅ Wasserstoff sind;
R₂ Carboxy oder Carboxamid ist und die verbleibenden Reste R₁, R₂, R₄ und R₅ Wasserstoff sind; oder
R₁ und R₂ oder R₂ und R₃ 1,4-Buta-1,3-dienylen ist und die verbleibenden Reste R₁, R₂, R₄ und R₅ Wasserstoff sind; und insbesondere ein solches, bei dem
R₁ bis R₅ Wasserstoff sind; oder
einer der Reste R₁ bis R₅ Methyl oder Ethyl ist und die verbleibenden Reste R₁ bis R₅ Wasserstoff sind.

Als ganz besonders bevorzugte Pyridiniumionen (XIIIa) seien genannt 1-Methylpyridinium, 1-Ethylpyridinium, 1-(1-Butyl)pyridinium, 1-(1-Hexyl)pyridinium, 1-(1-Octyl)pyridinium, 1-(1-Hexyl)pyridinium, 1-(1-Octyl)-pyridinium, 1-(1-Dodecyl)pyridinium, 1-(1-Tetradecyl)-pyridinium, 1-(1-Hexadecyl)pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-^{Octyl})-2-methylpyridinium, 1- (1-Dodecyl) - 2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethylpyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium und 1-(1-Octyl)-2-methyl-3-ethylpyridinium, 1-(1-Dodecyl)-2-methyl-3-ethyl-pyridinium, 1-(1-Tetradecyl)-2-methyl-3-ethyl-pyridinium und 1-(1-Hexadecyl)-2-methyl-3-ethyl-pyridinium.

Darüber hinaus kommen ionische Flüssigkeiten in Betracht, bei denen das Kation [A]⁺ ein Pyridaziniumion (XIIIb) ist, bei dem 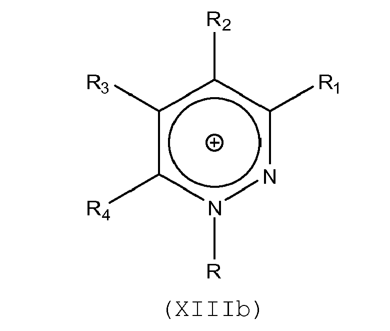
R₁ bis R₄ Wasserstoff sind; oder
einer der Reste R₁ bis R₄ Methyl oder Ethyl ist und die verbleibenden Reste R₁ bis R₄ Wasserstoff sind.

Ganz besonders bevorzugt sind zudem ionische Flüssigkeiten, bei denen das Kation [A]⁺ ein Pyrimidiniumionen (XIIIc) ist, bei dem 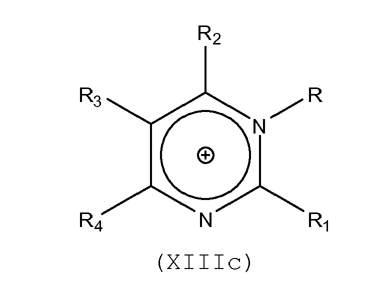
R₁ Wasserstoff, Methyl oder Ethyl ist und R₂ bis R₄ unabhängig voneinander Wasserstoff oder Methyl sind; oder R₁ Wasserstoff, Methyl oder Ethyl ist, R₂ und R₄ Methyl sind und R₃ Wasserstoff ist.

In Betracht kommen außerdem ionische Flüssigkeiten, bei denen das Kation [A]⁺ ein Pyraziniumionen (XIIId) ist, bei dem 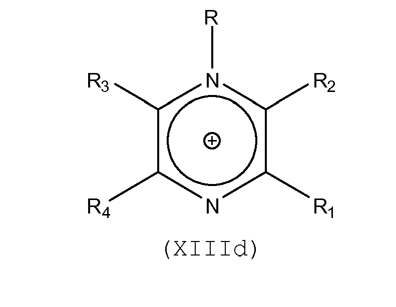
R₁ Wasserstoff, Methyl oder Ethyl ist und R₂ bis R₄ unabhängig voneinander Wasserstoff oder Methyl sind;
R₁ Wasserstoff, Methyl oder Ethyl ist, R₂ und R₄ Methyl sind und R₃ Wasserstoff ist;
R₁ bis R₄ Methyl sind; oder
R₁ bis R₄ Methyl Wasserstoff sind.

In Betracht kommen weiterhin ionische Flüssigkeiten, bei denen das Kation [A]⁺ ein Pyrazoliumion (XIIIf), (XIIIg) beziehungsweise (XIIIg') ist, bei dem 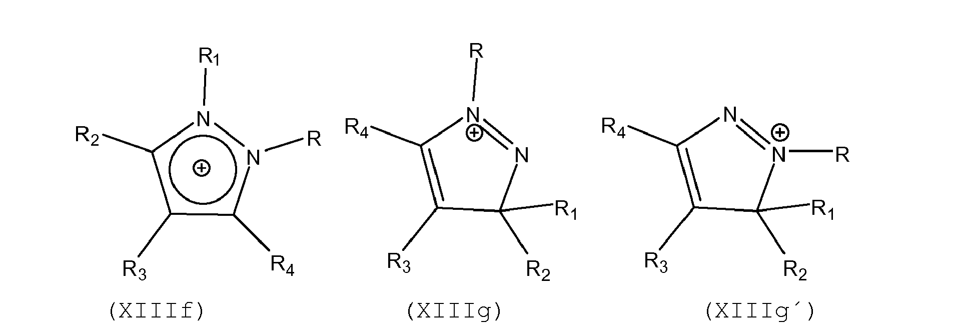
R¹ Wasserstoff, Methyl oder Ethyl ist und R² bis R⁴ unabhängig voneinander Wasserstoff oder Methyl sind.

In Betracht kommen darüber hinaus ionische Flüssigkeiten, bei denen das Kation [A]⁺ ein Pyrazoliumion (XIIIh)ist, bei dem 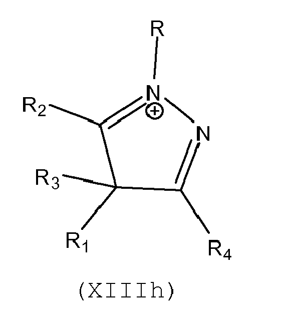
R¹ bis R⁴ unabhängig voneinander Wasserstoff oder Methyl sind.

In Betracht kommen zudem ionische Flüssigkeiten, bei denen das Kation [A]⁺ ein 1-Pyrazoliniumion (XIIII) ist, bei dem 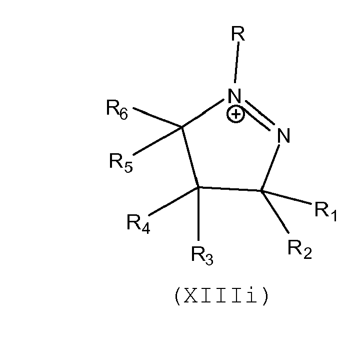 unabhängig voneinander R₁ bis R₆ Wasserstoff oder Methyl sind.

In Betracht kommen weiterhin ionische Flüssigkeiten, bei denen das Kation [A]⁺ ein 2-Pyrazoliniumion (XIIIj) ist, bei dem 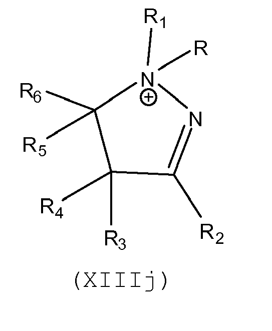
R₁ Wasserstoff, Methyl, Ethyl oder Phenyl ist und R₂ bis R₆ unabhängig voneinander Wasserstoff oder Methyl sind.

In Betracht kommen auch ionische Flüssigkeiten, bei denen das Kation [A]⁺ ein 3-Pyrazoliniumion (XIIIk) beziehungsweise (XIIIk') ist, bei dem 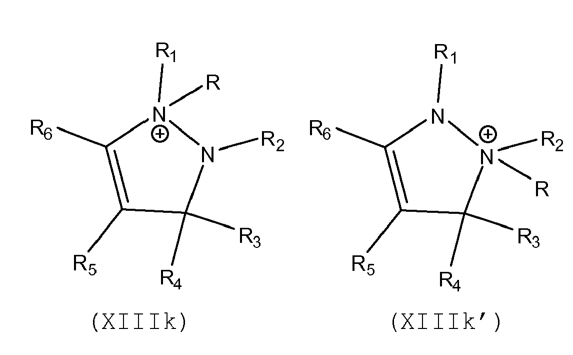
R₁ und R₂ unabhängig voneinander Wasserstoff, Methyl, Ethyl oder Phenyl sind und R3 bis R6 unabhängig voneinander Wasserstoff oder Methyl sind.

In Betracht kommen daneben ionische Flüssigkeiten, bei denen das Kation [A]⁺ ein Imidazoliniumion (XIIIl) ist, bei dem 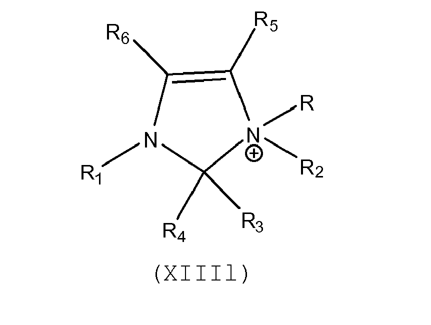
R für H oder Methyl steht, R₁ und R₂ unabhängig voneinander Wasserstoff, Methyl oder Ethyl, oder ein linearer gesättigter oder ungesättigter Acylrest mit 14 bis 22, vorzugsweise 16 bis 18 Kohlenstoffatomen sind und R₃ bis R₆ unabhängig voneinander für Wasserstoff, einen linearen gesättigten, gegebenenfalls OH-Gruppen enthaltenden Alkylrest mit 1-4 Kohlenstoffatomen stehen, bevorzugt Methyl oder ein Fettsäurerest ist,; insbesondere bevorzugt sind R₁ und R₂ Fettsäureacylreste, sowie R oder R₂ und R₃ Fettsäureacylreste. Von besonderer Bedeutung sind die Substanzen entsprechend Formel (XIIIm). Teilweise sind in der Literatur hierfür auch irreführende Formeln (analog Formel XIIIm' oder XIIIl) eingeführt.

In Betracht kommen außerdem ionische Flüssigkeiten, bei denen das Kation [A]⁺ ein Imidazoliniumion (XIIIm) beziehungsweise (XIIIm') ist, bei dem 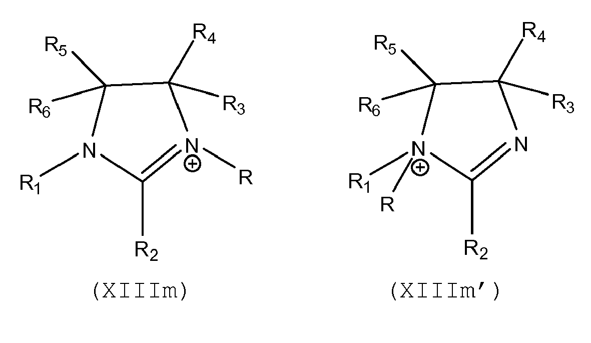
R für H oder Methyl steht, R₁ und R₂ unabhängig voneinander Wasserstoff, Methyl oder Ethyl, oder ein linearer gesättigter oder ungesättigter Acylrest mit 14 bis 22, vorzugsweise 16 bis 18 Kohlenstoffatomen sind und R₃ bis R₆ unabhängig voneinander für Wasserstoff, einen linearen gesättigten, gegebenenfalls OH-Gruppen enthaltenden Alkylrest mit 1-4 Kohlenstoffatomen stehen, bevorzugt Methyl oder ein Fettsäurerest ist,; insbesondere bevorzugt sind R₁ und R₂ Fettsäureacylreste, sowie R oder R₂ und R₃ Fettsäureacylreste. Von besonderer Bedeutung sind die Substanzen entsprechend Formel (XIIIm). Teilweise sind in der Literatur hierfür auch irreführende Formeln (analog Formel XIIIm' oder XIIIl) eingeführt.

In Betracht kommen weiterhin ionische Flüssigkeiten, bei denen das Kation [A]⁺ ein Imidazoliniumion (XIIIn) beziehungsweise (XIIIn') ist, bei dem 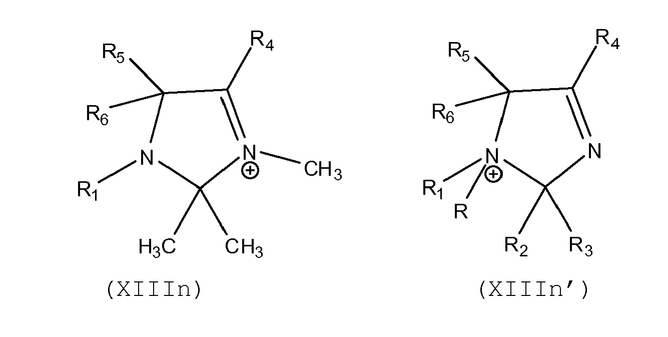
R₁ bis R₃ unabhängig voneinander Wasserstoff, Methyl oder Ethyl sind und R₄ bis R₆ unabhängig voneinander Wasserstoff oder Methyl sind.

In Betracht kommen daneben ionische Flüssigkeiten, bei denen das Kation [A]⁺ ein Thiazoliumion (XIIIo) beziehungsweise (XIIIo') sowie als Oxazoliumion (XIIIp) ist, bei dem 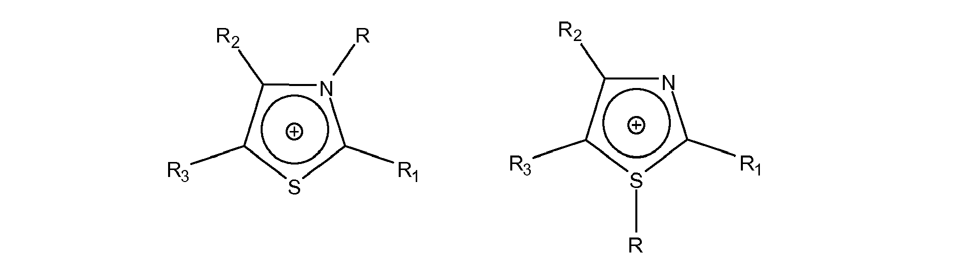 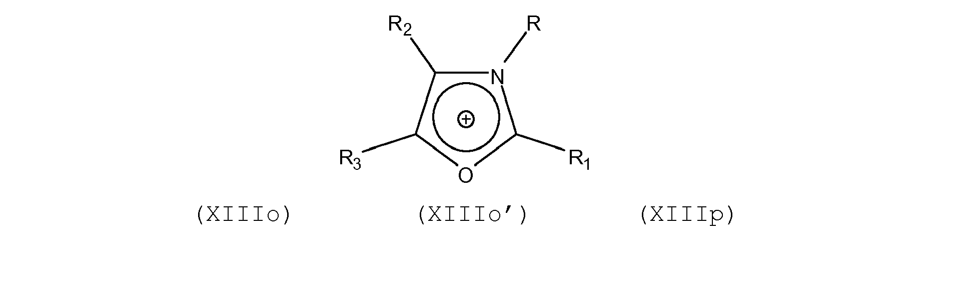
R₁ Wasserstoff, Methyl, Ethyl oder Phenyl ist und R₂ und
R₃ unabhängig vonein- ander Wasserstoff oder Methyl sind.

In Betracht kommen auch ionische Flüssigkeiten, bei denen das Kation [A]⁺ ein 1,2,4-Triazoliumion (XIIIq), (XIIIq') beziehungsweise (XIIIq") ist, bei dem 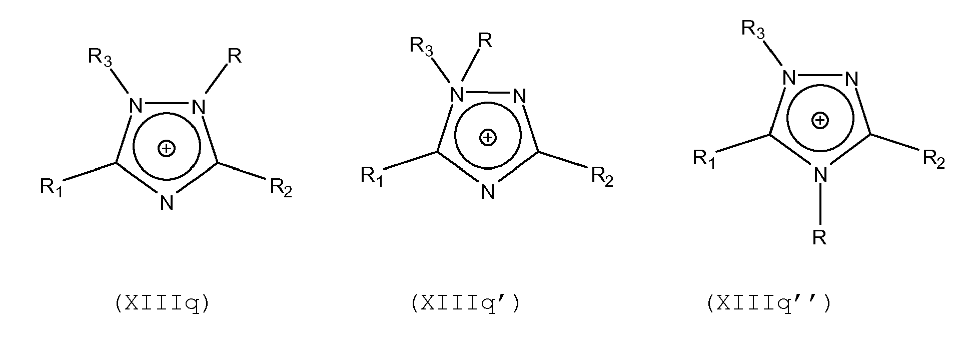
R₁ und R₂ unabhängig voneinander Wasserstoff, Methyl, Ethyl oder Phenyl sind und R₃ Wasserstoff, Methyl oder Phenyl ist.

In Betracht kommen weiterhin ionische Flüssigkeiten, bei denen das Kation [A]⁺ ein 1,2,3-Triazoliumion (XIIIr), (XIIIr') beziehungsweise (XIIIr") ist, bei dem 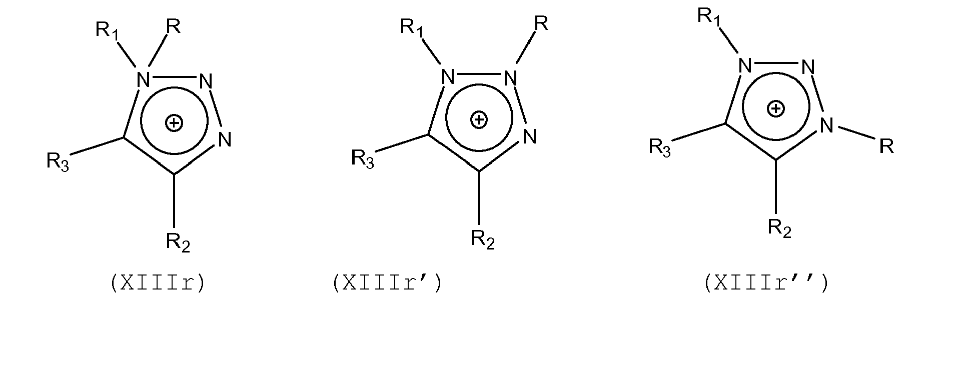
R₁ Wasserstoff, Methyl oder Ethyl ist und R₂ und R₃ unabhängig voneinander Wasserstoff oder Methyl sind, oder
R₂ und R₃ zusammen 1,4-Buta-1,3-dienylen ist.

In Betracht kommen zudem ionische Flüssigkeiten, bei denen das Kation [A]⁺ ein Pyrrolidiniumion (XIIIs) ist, bei dem 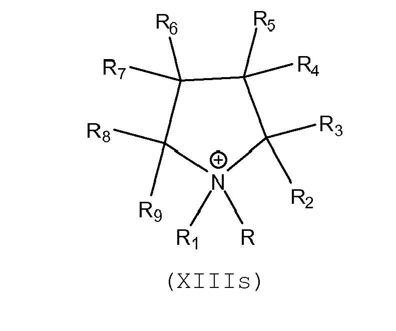
R₁ Wasserstoff, Methyl, Ethyl oder Phenyl ist und R₂ bis
R₉ unabhängig voneinander Wasserstoff oder Methyl sind.

In Betracht kommen daneben ionische Flüssigkeiten, bei denen das Kation [A]⁺ ein Imidazolidiniumion (XIIIt) ist, bei dem 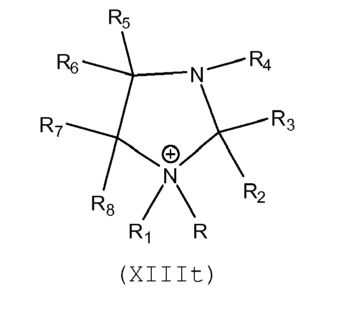
R₁ und R₄ unabhängig voneinander Wasserstoff, Methyl, Ethyl oder Phenyl sind und R₂ und R₃ sowie R₅ bis R₈ unabhängig voneinander Wasserstoff oder Methyl sind.

In Betracht kommen auch ionische Flüssigkeiten, bei denen das Kation [A]⁺ ein Ammoniumion (IV) ist, bei dem 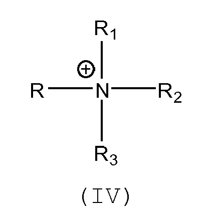
R₁ bis R₃ unabhängig voneinander C1-C18-Alkyl sind; oder
R₁ bis R₃ unabhängig voneinander Wasserstoff oder C1-C18-Alkyl sind und R₄ 2-Hydroxyethyl ist; oder
R₁ und R₂ zusammen 1,5-Pentylen oder 3-Oxa-1,5-pentylen sind und R₃ C1-C18-Alkyl, 2-Hydroxyethyl oder 2-Cyanoethyl ist.

Als besonders bevorzugte Ammoniumionen (IV) seien außerdem genannt Methyl-tri-(1-butyl)-ammonium, 2-Hydroxyethyl-ammonium, Bis (2-hydroxyethyl)dimethlylammonium, N,N-Dimethylpiperidinium und N,N-Dimethylmorpholinium. Zudem kommen ionische Flüssigkeiten in Betracht, bei denen das Kation [A]⁺ ein Guanidiniumion (IVv) ist, bei dem 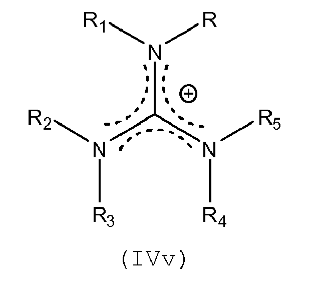
R₁ bis R₅ Methyl sind.
R₁ bis R₅ unabhängig voneinander C1-C18-Alkyl sind; oder
R₁ bis R₅ unabhängig voneinander Wasserstoff oder C1-C18-Alkyl oder 2-Hydroxyethyl sind.

Als ganz besonders bevorzugtes Guanidiniumion (IVv) sei genannt N,N,N',N',N",N"- Hexamethylguanidinium.

In Betracht kommen auch ionische Flüssigkeiten, bei denen das Kation [A]⁺ ein Derivat eines Ethanolamins, z.B. ein Choliniumion (XIIIw), oder eines Diethanolamins (XIIIw'), oder eines Triethanolamins (XIIIw") ist, bei dem 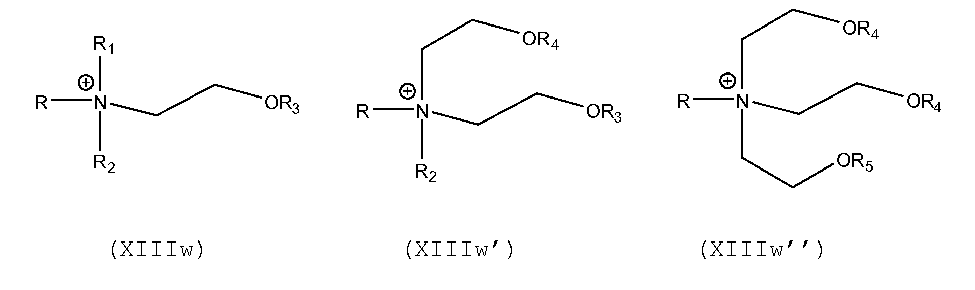
R₁ und R₂ unabhängig voneinander Methyl, Ethyl, 1-Butyl oder 1-Octyl sind und R₃ Wasserstoff, Methyl, Ethyl, Acetyl, -SO₂OH oder -PO(OH)₂ ist;
R₁ Methyl, Ethyl, 1-Butyl oder 1-Octyl ist, R₂ eine -CH₂-CH₂-OR₄-Gruppe ist und R₃ und R₄ unabhängig voneinander Wasserstoff, Methyl, Ethyl, Acetyl, -SO₂OH oder -PO(OH)₂ sind; oder
R₁ eine -CH₂-CH₂-OR₄-Gruppe ist, R₂ eine -CH₂-CH₂-OR₅-Gruppe ist und R₃ bis R₅ unabhängig voneinander Wasserstoff, Methyl, Ethyl, Acetyl, -SO₂OH oder - PO(OH)₂ sind.
R₁ Methyl, Ethyl, 1-Butyl, 1-Octyl, Acetyl, -SO₂OH, oder -PO(OH)₂ ist und R₃ bis R₅ unabhängig voneinander Wasserstoff, Methyl, Ethyl, Acetyl, -SO₂OH, -PO(OH)₂, oder -(CₙH₂ₙO)ₘR₁ mit n = 1 bis 5 und m = 1 bis 100 sind.

Bevorzugt sind außerdem Verbindungen in denen R, R1 und R2 Alkylgruppen mit 1 bis 4 Kohlenstoffatomen, besonders bevorzugt gleich einer Methylgruppe sind, und R3 und/oder R4 gesättigte oder ungesättigte Fettsäure- bzw. Acylreste mit 8 bis 22 Kohlenstoffatomen, bevorzugt 12 bis 18 Kohlenstoffatomen sind. Es können auch Mischungen der Acyl- oder Fettsäurereste (insbesondere beispielsweise in natürlich vorkommenden Verhältnissen) vorliegen.

Ganz besonders bevorzugt ist bei Formel (XIIIw") mit R, R1, R2 gleich einem Alkylrest mit 1 bis 4 Kohlenstofatomen, insbesondere Methylgruppen und R3 gleich einem Fettsäurerest und R4 und R5 gleich einem Fettsäurerest oder gleich Wasserstoff.

In Betracht kommen ionische Flüssigkeiten, bei denen das Kation [A]⁺ ein Phosphoniumion (VI) ist, bei dem R₁ bis R₃ unabhängig voneinander C1-C18-AlKyl, insbesondere Butyl, Isobutyl, 1-Hexyl oder 1-Octyl sind.

Unter den vorstehend genannten Kationen sind die Pyridiniumionen (XIIIa), Imidazoliumionen (XII) und Ammoniumionen (IV) bevorzugt, insbesondere 1-Methylpyridinium, 1-Ethylpyridinium, 1-(1-Butyl)pyridinium, 1-(1-Hexyl)pyridinium, 1-(1-^{Octyl})pyridinium, 1-(1-Hexyl)-pyridinium, 1- (1-^{Octyl})-pyridinium, 1-(1-Dodecyl)-pyridinium, 1-(1-Tetra- decyl)-pyridinium, 1-(1-Hexadecyl)-pyridinium, 1 ,2-Dimethylpyridinium, 1 -Ethyl-2- methylpyridinium, 1-(1-Butyl)-2-methylpyidinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethyl-pyridinium, 1-(1-Hexadecyl)-2-ethylpyridinium, 1,2-Dimethyl-5-ethylpyridinium, 1,5-Diethyl-2-methyl-pyridinium, 1-(1-Butyl)-2-methyl-3-ethyl-pyridinium, 1-(1-Hexyl)-2- methyl-3-ethyl-pyridinium, 1-(1-Octyl)-2-methyl-3-ethylpyridinium, 1 -(1-Dodecyl)-2-methyl-3-ethyl-pyridinium, 1-(1-Tetradecyl)-2-methyl-3-ethyl-pyridinium, 1-(1-Hexadecyl)-2-methyl-3-ethyl-pyridinium, 1-Methylimidazolium, 1-Ethylimidazolium, 1-(1- Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1 ,2-Dimethylimidazolium, 1,2,3-Trimethylimidazolium, 1-Ethyl-2,3-dimethylimidazolium, 1-(1-Butyl)-2,3-dimethyl-imidazolium, 1-(1-Hexyl)-2,3-dimethyl-imidazolium und 1-(1-Octyl)-2,3-dimethylimidazolium, 1,4-Dimethylimidazolium, 1,3,4-Trimethylimidazolium, 1 ,4-Dimethyl-3- ethylimidazolium, 3-butylimidazolium, 1,4-Dimethyl-3-octylimidazolium, 1,4,5-Trimethyl- imidazolium, 1,3,4,5-Tetramethylimidazolium, 1 ,4,5-Trimethyl-3-ethylimidazolium, 1,4,5-Trimethyl-3-butylimidazolium, 1,4,5-Trimethyl-3-octylimidazolium und 2-Hydroxy-ethylammonium.

Bei den in den Formeln (IIIa) bis (IIIj) genannten Metallkationen [M¹]⁺, [M²]⁺, [M³]⁺, [M⁴]²⁺ und [M⁵]³⁺ handelt es sich im Allgemeinen um Metallkationen der 1., 2., 6., 7., 8., 9., 10., 11., 12. und 13. Gruppe des Periodensystems. Geeignete Metallkationen sind beispielsweise Li⁺, Na⁺, K⁺, Cs⁺, M²⁺, Ca²⁺, Ba²⁺, Cr³⁺, Fe²⁺, Fe³⁺, Co²⁺, Ni²⁺, Cu²⁺, Ag⁺, Zn²⁺ und Al³⁺.

Die erfindungsgemäß Verwendung findenden ionischen Flüssigkeiten bestehen aus mindestens einem der vorgenannten Kationen kombiniert mit jeweils mindestens einem Anion. Als Anionen kommen prinzipiell alle Anionen in Betracht, welche in Verbindung mit dem Kation zu einer ionische Flüssigkeit führen.
Das Anion [Y]ⁿ⁻ der ionischen Flüssigkeit ist beispielsweise ausgewählt aus:
der Gruppe der Halogenide und halogenhaltigen Verbindungen der Formeln: F⁻ Cl⁻, Br⁻, I⁻, BF₄⁻, PF₆⁻, AlCl₄⁻, Al₂Cl₇⁻, Al₃Cl₁₀⁻ , AlBr₄⁻, FeCl₄⁻, BCl₄⁻ SbF₆⁻, AsF₆⁻, ZnCl₃⁻, SnCl₃⁻, CuCl₂⁻, CF₃SO₃⁻, (CF₃SO₃)₂N⁻, CF₃CO₂⁻, CCl₃CO₂⁻, CN⁻, SCN⁻, OCN⁻, NO₂⁻, NO₃⁻, N(CN)⁻ ;
der Gruppe der Sulfate, Sulfite und Sulfonate der allgemeinen Formeln: SO₄²⁻, HSO₄⁻, SO₃^{2"}, HSO₃⁻, R^{a}OSO₃⁻, R^{a}SO₃⁻;
der Gruppe der Phosphate der allgemeinen Formeln: PO₄³⁻, HPO₄²⁻, H₂PO⁴⁻, R^{a}PO₄²⁻, HR^{a}PO₄-, R^{a}R^{b}PO₄⁻;
der Gruppe der Phosphonate und Phosphinate der allgemeinen Formel: R^{a}HPO₃⁻,R^{a}R^{b}PO₂⁻, R^{a}R^{b}PO₃⁻;
der Gruppe der Phosphite der allgemeinen Formeln: PO₃³⁻, HPO₃²⁻, H₂PO₃⁻, R^{a}PO₃²⁻, R^{a}HPO₃⁻, R^{a}R^{b}PO₃⁻;
der Gruppe der Phosphonite und Phosphinite der allgemeinen Formel: R^{a}R^{b}PO₂⁻, R^{a}HPO₂⁻, R^{a}R^{b}PO⁻, R^{a}HPO⁻;
der Gruppe der Carboxylate der allgemeinen Formeln: R^{a}COO⁻; • der Gruppe der Borate der allgemeinen Formeln: BO₃³⁻, HBO₃^{*2*-}*,* H₂BO₃⁻, R^{a}R^{b}BO₃⁻, R^{a}HBO₃⁻, R^{a}BO₃²⁻, B(OR^{a}) (OR^{b}) (OR^{c}) (OR^{d})⁻, B(HSO₄)⁻, B(R^{a}SO₄)⁻ ;
der Gruppe der Boronate der allgemeinen Formeln: R^{a}BO₂²⁻, R^{a}R^{b}BO⁻;
der Gruppe der Carbonate und Kohlensäureester der allgemeinen Formeln: HCO₃⁻, CO₃²⁻, R^{a}CO₃⁻;
der Gruppe der Silikate und Kieselsäuresäureester der allgemeinen Formeln: SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻;
der Gruppe der Alkyl- bzw. Arylsilan-Salze der allgemeinen Formeln: R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻;
der Gruppe der Carbonsäureimide, Bis(sulfonyl)imide und Sulfonylimide der allgemeinen Formeln: 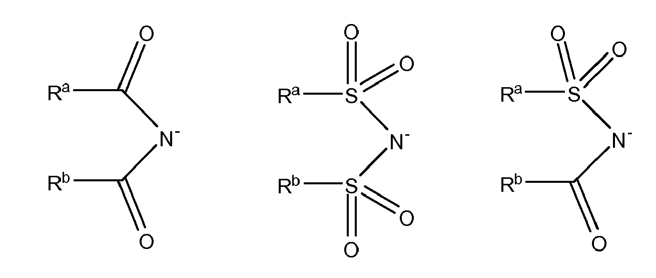 der Gruppe der Methide der allgemeinen Formel: 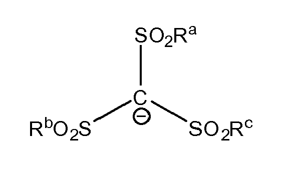
der Gruppe der Alkoxide und Aryloxide der allgemeinen Formeln: R^{a}O⁻;
der Gruppe der Halometallate der allgemeinen Formel [MᵣHalₜ]^{s-}, wobei M für ein Metall und Hal für Fluor, Chlor, Brom oder lod steht, r und t ganze positive Zahlen sind und die Stöchiometrie des Komplexes angeben und s eine ganze positive Zahl ist und die Ladung des Komplexes angibt;
der Gruppe der Sulfide, Hydrogensulfide, Polysulfide, Hydrogenpolysulfide und Thiolate der allgemeinen Formeln: S²⁻, HS⁻, [Sᵥ]²⁻, [HSᵥ]⁻, [R^{a}S]⁻, wobei v eine ganze positive Zahl von 2 bis 10 ist;
der Gruppe der komplexen Metallionen wie Fe(CN)₆³⁻, Fe(CN)₆⁴⁻, MnO₄⁻, Fe(CO)₄⁻.
   Darin bedeuten R^{a}, R^{b}, R^{c} und R^{d} unabhängig voneinander jeweils Wasserstoff; C₁-C₃₀-Alkyl und deren aryl-, heteroaryl-, cycloalkyl-, halogen-, hydroxy-, amino-, carboxy-, formyl-, -O-, -CO-, -CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2- Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl- 1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pen- tadecyl, Hexadecyl, Heptadecyl, Octadecyl, Nonadecyl, Icosyl, Henicosyl, Doco- syl, Tricosyl, Tetracosyl, Pentacosyl, Hexacosyl, Heptacosyl, Octacosyl, Nona- cosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclo- pentylpropyl, Cyclohexylmethyl, 2-Cyclohexylethyl, 3-Cyclohexylpropyl, Methoxy, Ethoxy, Formyl, Acetyl oder C_{q}F_{2(q-a)+(1-b)}H_{2a+b} mit q < 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅);
C₃-C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl O- der C_{q}F_{2(q-a)-(1-b)}H_{2a-b} mit q ≤ 30, 0 ≤ a ≤ q und b = 0 oder 1;
C₂-C₃₀-Alkenyl und deren aryl-, heteroaryl-, cycloalkyl-, halogen-, hydroxy-, amino-, carboxy-, formyl-, -O-, -CO-oder -CO-O-substituierte Komponenten, wie beispielsweise 2-Propenyl, 3-Butenyl, cis-2-Butenyl, trans-2-Butenyl oder C_{q}F_{2(q-a)-(1-b)}H_{2a-b} mit q ≤ 30, 0 ≤ a ≤ q und b = 0 oder 1;
C₃-C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5- Cyclohexadienyl oder CqF_{2(q-a)-3(1-b)}H_{2a-3b} mit q ≤ 30, 0 ≤ a ≤ q und b = 0 oder 1;
Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-0-substituierte Komponenten, wie beispielsweise Phenyl, 2-Methyl-phenyl (2-ToIyI), 3-Methyl-phenyl (3-ToIyI), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5; oder
zwei Reste einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.
   In Betracht kommende Anionen sind zum Beispiel Chlorid; Bromid; Iodid; Thiocyanat; Hexafluorophosphat; Trifluormethansulfonat; Methansulfonat; Formiat; Acetat; Glycolat; Lactat; Oxalat; Citrat; ; Malat; Maleat; Tartrat; Mandelat; Nitrat; Nitrit; Trifluoracetat; Sulfat; Hydrogensulfat; Methylsulfat; Ethylsulfat; 1-Propylsulfat; 1-Butylsulfat; 1-Hexylsulfat; 1-Octylsulfat; Phosphat; Dihydrogenphosphat; Hydrogenphosphat; C₁-C₄-Dialkylphosphate; Propionat; Tetrachloroaluminat; Al₂Cl₇⁻; Chlorozinkat; Chloroferrat; Bis(trifluoromethylsulfonyl) imid; Bis (pentafluoroethylsulfonyl) imid; Bis (methylsulfonyl) imid; Bis (p-Tolylsulfonyl)imid; Tris(trifluoromethylsulfonyl)methid; Bis(pentafluoroethylsulfonyl)methid; p-Tolylsulfonat; Tetracarbonylcobaltat;
Dimethylenglykolmonomethylethersulfat; Oleat; Stearat; Acrylat; Methacrylat; Maleinat; Hydrogencitrat; Vinylphosphonat; Bis(pentafluoroethyl)phosphinat; Borate wie Bis[salicylato(2-)]borat, Bis[oxalato(2-)]borat, Bis[1,2-benzoldiolato(2-)-O,O']borat, Tetracyanoborat, Tetrafluoroborat; Dicyanamid; Tris(pentafluoro-ethyl)trifluorophosphat; Tris(heptafluoropropyl)-trifluorophosphat, cyclische Arylphosphate wie Brenzcatecholphosphat (C₆H₄O₂)P(O)O⁻ und Chlorocobaltat.

Bevorzugte Anionen werden ausgewählt aus der Gruppe - ohne Anspruch auf Vollständigkeit - der Halogenide, Bis(perfluoralkylsulfonyl)amide bzw. -imide wie z.B. Bis (trifluormethylylsulfonyl) imid, Alkyl- und Aryltosylate, Perfluoralkyltosylate, Nitrat, Sulfat, Hydrogensulfat, Alkyl- und Arylsulfate, Polyethersulfate und - sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat. Weiterhin sind Dicyanamid, Thiocyanat, Isothiocyanat, Tetraphenylborat, Tetrakis(pentafluorphenyl)borat, Tetrafluoroborat, Hexafluorophosphat, Polyetherphosphate und Phosphat.
Ganz besonders bevorzugte Anionen sind Chlorid, Bromid, Hydrogensulfat, Tetrachloroaluminat, Thiocyanat, Methylsulfat, Ethylsulfat, Methansulfonat, Formiat, Acetat, Glycolat, Lactat, Dimethylphosphat, Diethylphosphat, p-Tolylsulfonat, Tetrafluoroborat und Hexafluorophosphat.

Besonders bevorzugte ionische Flüssigkeiten im Rahmen dieser Offenbarung sind:
1-Butyl-3-methylimidazolium2-(2-methoxyethoxy)ethylsulfat, 1-Butyl-3-methylimidazolium acetate, 1-Ethyl-3-methylimidazolium acetate, Tetrabutylammoniumbenzoat, Trihexyltetradecylphosphonium-bis(2,4,4-trimethylpentyl)-phosphinat, 1-Ethyl-3-methylimidazolium bis(pentafluoro-ethylsulfonyl)imid, 1-Butyl-1-methylpyrrolidinium bis(trifluoromethylsulfonyl)imid, 1-Butyl-3-methylimidazoliumbis(trifluoromethylsulfonyl)imid, 1-Butyl-3-methylpyridinium-bis (trifluoromethylsulfonyl) imid, 1,2-Dimethyl-3-propylimidazolium bis(trifluoromethylsulfonyl)imid, 1-Ethyl-3-methylimidazolium bis(trifluoromethylsulfonyl)imid, 3-Methyl-1-propylpyridinium bis(trifluoromethylsulfonyl)imid, Methyltrioctylammonium bis(trifluoromethylsulfonyl)imid, Tetrabutylammonium bis(trifluoromethylsulfonyl)imid, Trihexyltetradecylphosphonium-bis(trifluoromethylsulfonyl)imid, 1-Butyl-1-methyl-pyrrolidiniumbromid, 1-Butylpyridiniumbromid, 1-Ethyl-3-methylimidazoliumbromid, 4-Methyl-N-butylpyridiniumbromid, Tetrabutylammoniumbromid, Tetrabutylphosphoniumbromid, Tetraheptylammoniumbromid, Tetrahexylammoniumbromid, Tetraoctylammoniumbromid, Tetraoctylphosphoniumbromid, Tetrapentylammoniumbromid, Tributylhexadecylphosphoniumbromid, 1-Allyl-3-methylimidazoliumchlorid, 1-Benzyl-3-methylimidazoliumchlorid, 1-Butyl-1-methylpyrrolidiniumchlorid, 1-Butyl-2,3-dimethylimidazoliumchlorid, 1-Butyl-3-methylimidazoliumchlorid, 1-Butyl-4-methylpyridiniumchlorid, 1-Ethyl-2,3-dimethylimidazoliumchlorid, 1-Ethyl-3-methylimidazoliumchlorid, 1-Hexyl-3-methylimidazolium chlorid, 1-Methyl-3-octylimidazoliumchlorid, Methylimidazoliumchlorid, Tetrabutylammoniumchlorid, Tetrabutylphosphoniumchlorid, Tetraheptylammoniumchlorid, Tetraoctylammoniumchlorid, Trihexyltetradecylphosphoniumchlorid, Butylammonium-α-cyano-4-hydrocinnamat, Diethylammonium-α-cyano-4-hydrocinnamat, Trihexyltetradecylphosphoniumdecanoat, 1-Butyl-1-methylpyrrolidiniumdicyanamid, 1-Butyl-3-methylimidazoliumdicyanamid, 1-Ethyl-3-methylimidazoliumdicyanamid, Trihexyltetradecylphosphoniumdicyanamid, 1-Ethyl-2,3-dimethylimidazolumethylsulat, 1-Ethyl-3-methylimidazoliumethylsulfat, 1-Benzyl-3-methylimidazoliumhexafluorophosphat, 1-Butyl-2,3-dimethylimidazoliumhexafluorophosphat, 1-Butyl-3-(3,3,...-tridecafluorooctyl)imidazoliumhexafluorophosphat, 1-Butyl-3-methylimidazoliumhexafluorophosphat, 1-Ethyl-3-methylimidazoliumhexafluorop h os phat, 1-Hexyl-3-methylimidazoliumhexafluorophosphat, 1-Methyl-3-(3,3,...-tridecafluorooctyl)imidazoliumhexafluorophosphat, 1-Butyl-4-methylpyridiniumhexafluorophosphat, 1-Methyl-3-octylimidazoliumhexafluorophosphat, Trihexyltetradecylphosphoniumhexafluorophosphat, 1-Butyl-3-methylimidazoliumhydrogensulfat, 1-Ethyl-3-methylimidazoliumhydrogensulfat, Methylimidazoliumhydrogensulfat, 1-Dodecyl-3-methylimidazoliumhydrogensulat, 1-Dodecyl-3-methylimidazoliumiodid, Tetrahexylammoniumiodid, 1-Butyl-3-methylimidazoliummethansulfonat, 1-Ethyl-3-methylimidazoliummethansulfonat, Tetrabutylammoniummethansulfonat, Tetrabutylphosphoniummethansulfonat, 1-Butyl-3-methylimidazoliummethylsulfat, 1,3-Dimethylimidazoliummethylsulfat, Methyltributylammoniummethylsulfat, 1-Ethyl-3-methylimidazoliummethylsulfat, 1,2,3-Trimethylimidazoliummethylsulfat, 1-Butyl-3-methylimidazoliumnitrat, 1-Ethyl-3-methylimidazoliumnitrat, Tetrabutylammoniumnoafluorobutansulfonat, Tetrabutylammoniumheptadecafluorooctansulfonat, 1-Butyl-3-methylimidazoliumoctylsulfat, 4-(3-Butyl-1-imidazolio)butan-1-sulfonat, 3-(Triphenylphosphonio)propan-1-sulfonat, 1-Butyl-3-methylimidazoliumtetrachloroaluminat, 1-Ethyl-3-methylimidazoliumtetrachloroaluminat, 1-Benzyl-3-methylimidazoliumtetrafluoroborat, 1-Butyl-2,3-dimethylimidazoliumtetrafluoroborat, 1-Butyl-3-methylimidazoliumtetrafluoroborat, 1-Ethyl-3-methylimidazoliumtetrafluoroborat, 1-Hexyl-3-methylimidazoliumtetrafluoroborat, 1-Methyl-3-octylimidazoliumtetrafluoroborat, 1-Butyl-1-methylpyrrolidiniumtetrafluoroborat, 1-Butyl-4-methylpyridiniumtetrafluoroborat, Tetrabutylammoniumtetrafluoroborat, Tetrahexylammoniumtetrafluoroborat, Tetrabutylphosphoniumtetrafluoroborat, Trihexyltetradecylphosphoniumtetrafluoroborat, 1-Butyl-3-methylimidazoliumthiocyanat, 1-Ethyl-3-methylimidazoliumthiocyanat, Tetrapentylammoniumthiocyanat, Trioctylmethylammoniumthiosalicylat, 1-Butyl-3-methylimidazoliumtosylat, 1-Ethyl-3-methylimidazoliumtosylat, Tetrabutylphosphoniumtosylat, Triisobutylmethylphosphoniumtosylat, 3-(Triphenylphosphonio)-propan-1-sulfonsäuretosylat, Tetraethylammoniumtrifluoroacetat, 4-(3-Butyl-1-imidazolio)-butan-1-sulfonsäuretrifluormethansulfonat, 1-Butyl-3-methylimidazoliumtrifluormethansulfonat, 1-Ethyl-2,3-dimethylimidazoliumtrifluormethansulfonat, 1-Ethyl-3-methylimidazoliumtrifluormethansulfonat, 1-Hexyl-3-methylimidazoliumtrifluormethansulfonat, 1-Methyl-3-octylimidazoliumtrifluormethansulfonat, Tetraethylammoniumtrifluormethansulfonat, 1,2,3-Trimethylimidazoliumtrifluormethansulfonat, 1-Hydroxyethyl-3-methylimidazolium-2-(2-methoxyethoxy)ethylsulfat, 1-Hydroxyethyl-3-methylimidazoliumacetat, 1-Hydroxyethyl-3-methylimidazoliumtrifluoracetat, 1-Hydroxyethyl-3-methylimidazolium-bis(trifluoromethylsulfonyl)imid, 1-Hydroxyethyl-3-methylimidazoliumbromid, 1-Hydroxyethyl-3-methylimidazoliumchlorid, 1-Hydroxyethyl-3-methylimidazoliumdecanoat, 1-Hydroxyethyl-3-methylimidazoliumdicyanamid, 1-Hydroxyethyl-3-methylimidazoliumhexafluorophosphat, 1-Hydroxyethyl-3-methylimidazoliumhydrogensulfat, 1-Hydroxyethyl-3-methylimidazoliumiodid, 1-Hydroxyethyl-3-methylimidazoliummethansulfonat, 1-Hydroxyethyl-3-methylimidazoliummethylsulfat, 1-Hydroxyethyl-3-methylimidazoliumethylsulfat, 1-Hydroxyethyl-3-methylimidazoliumnitrat, 1-Hydroxyethyl-3-methylimidazoliumphosphat, 1-Hydroxyethyl-3-methylimidazoliumoctylsulfat, 1-Hydroxyethyl-3-methylimidazoliumtetrachloroaluminat, 1-Hydroxyethyl-3-methylimidazoliumtetrafluoroborat, 1-Hydroxyethyl-3-methylimidazoliumthiocyanat, 1-Hydroxyethyl-3-methylimidazolium-salicylat, 1-Hydroxyethyl-3-methylimidazoliumthiosalicylat, 1-Hydroxyethyl-3-methylimidazoliumtosylat, 1-Hydroxyethyl-3-methylimidazoliumtrifluormethansulfonat, 1-Hydroxyethyl-3-methylimidazoliumlactat, 1-Hydroxyethyl-3-methylimidazoliumglycolat, 1-Hydroxyethyl-3-methylimidazoliumcitrat, 1-Hydroxyethyl-3-methylimidazoliumoxalat, 1-Hydroxyethyl-3-methylimidazoliumtartrat, bis-(Hydroxyethyl)dimethylammoniumacetat, bis-(Hydroxyethyl)dimethylammoniumtrifluoracetat, bis-(Hydroxyethyl)dimethylammonium-bis(trifluoromethylsulfonyl)imid, bis-(Hydroxyethyl)dimethylammoniumbromid, bis-(Hydroxyethyl)dimethylammoniumchlorid, bis-(Hydroxyethyl)dimethylammoniumdecanoat, bis-(Hydroxyethyl) dimethylammoniumdicyanami d, bis-(Hydroxyethyl)dimethylammoniumhexafluorophosphat, bis-(Hydroxyethyl)dimethylammoniumhydrogensulfat, bis-(Hydroxyethyl)-dimethylammoniumiodid, bis-(Hydroxyethyl)dimethylammoniummethansulfonat, bis-(Hydroxyethyl)dimethylammoniummethylsulfat, bis-(Hydroxyethyl)dimethylammoniumethylsulfat, bis-(Hydroxyethyl)dimethylammoniumnitrat, bis-(Hydroxyethyl)dimethylammoniumphosphat, bis-(Hydroxyethyl)dimethylammoniumoctylsulfat, bis-(Hydroxyethyl)dimethylammoniumtetrachloroaluminat, bis-(Hydroxyethyl)-dimethylammoniumtetrafluoroborat, bis-(Hydroxyethyl)dimethylammoniumthiocyanat, bis-(Hydroxyethyl)dimethylammoniumsalicylat, bis-(Hydroxyethyl)dimethylammoniumthiosalicylat, bis-(Hydroxyethyl)dimethylammoniumtosylat, bis-(Hydroxyethyl)dimethylammoniumtrifluormethansulfonat, bis-(Hydroxyethyl)dimethylammoniumlactat, bis-(Hydroxyethyl)dimethylammoniumglycolat, bis-(Hydroxyethyl)dimethylammoniumcitrat, bis-(Hydroxyethyl)dimethylammoniumoxalat, bis-(Hydroxyethyl)dimethylammoniumtartrat.

Erfindungsgemäß in einer weiteren bevorzugten Ausführungsform werden solche ionische Flüssigkeiten bzw. deren Mischungen verwendet, die eine Kombination eines 1,3-Dialkylimidazolium-, 1 , 2 , 3-Trialkylimidazolium-, 1,3-Dialkylimidazolinium- und 1,2,3-Trialkylimidazoliniumkations mit einem Anion ausgesucht aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat enthalten.

Darüber hinaus können auch einfache, kommerziell erhältliche, acyclische quarternäre Ammoniumsalze wie z.B. TEGO^{®} IL T16ES, TEGO^{®} IL K5MS, TEGO^{®} IL DS oder auch TEGO® IL 2MS (Produkte der Evonik Goldschmidt GmbH) eingesetzt werden.

Schäume in wässrigen Systemen entstehen, weil sich amphiphile und damit oberflächenaktive Tensidmoleküle an der Grenzschicht Wasser/Gas anreichern und zu einer Absenkung der Oberflächenspannung führen. Aufgrund der dadurch verminderten Oberflächenspannung wird zum einen leicht eine neue Wasser/Gas Grenzfläche (=Schaum) geschaffen. Zum anderen wird der entstandene Schaum eines wässrigen Systems von den Tensiden durch unterschiedliche Mechanismen stabilisiert.

Beispielhaft sei hier der dem Fachmann bekannte Gibbs-Maragoni-Effekt erwähnt, sowie die elektrostatische oder sterische Abstoßung der Tensidmoleküle bei verminderter Schaumlamellendicke genannt.
Die für diese wässrigen Tensidsysteme entwickelten Entschäumer beeinflussen diese Stabilisierungsmechanismen auf unterschiedliche Weise, in der z.B. die Verdrängung und Deaktivierung der Tensidmoleküle an der Wasser/Gas-Grenzfläche eine Rolle spielt.

Im Gegensatz zu wässrigen, weitestgehend nicht-ionischen (Tensid-stabilisierten) Systemen bestehen die ionischen Flüssigkeiten nur aus ionischen Komponenten. Die Stabilisierung des Schaumes einer ionischen Flüssigkeit erfolgt über andere Mechanismen als die eines wässrigen Systems. Sie sollte insbesondere vielmehr der Stabilisierung der Schäume von organischen nicht-wäßrigen Ölen (z.B. Dieselöl) ähneln, die über Verunreinigungen mit nicht-tensidischem Charakter geschieht.

Umso überraschender war die Erkenntnis, dass insbesondere Entschäumer, die für die Entschäumung von Tensid-stabilisierten wässrigen Systemen entwickelt worden sind, auch in den wasserfreien (bzw. wasserarmen) ionischen Flüssigkeiten eine gute entschäumende Wirkung haben und damit die Aufgabenstellung lösen.

Entschäumer im Sinne dieser Erfindung bestehen in der Regel aus hydrophoben, unter Anwendungsbedingungen in Wasser unlöslichen Ölen oder feinteiligen, hydrophoben Feststoffen. Die Öle können zur Wirkungsverbesserung feinteilige, hydrophobe Partikel beinhalten. Solche hydrophoben Feststoffe, Öle bzw. Dispersionen von Partikeln in Ölen können durch Abmischung mit Additiven (z.B. Emulgatoren) so modifiziert werden, dass sie in wässrigen Anwendungen einfach mit wenig Scherung emulgierbar sind. Gegebenenfalls können diese Öle bzw. Dispersionen auch direkt zu wässrigen Emulsionen formuliert werden, wobei übliche Additive (Emulgatoren, Verdicker, Schutzkolloide, Konservierungsstoffe) und Homogenisierungstechniken zur Emulsionsherstellung verwendet werden können.

Beispiele für hydrophobe Öle, die in Entschäumerformulierungen für wässrige Systeme verwendet werden, sind Mineralöle (A), Pflanzenöle (B), Siliconöle (C), Polyoxyalkylene (D), modifzierte Polysiloxane (E), sowie Mischungen aus diesen Komponenten.

Beispiele hydrophober anorganischer Feststoffe sind gegebenenfalls hydrophobierte Kieselsäure (F), Aluminiumoxid, Erdalkalicarbonate oder ähnliche, dem Stand der Technik bekannte und übliche feinteilige Feststoffe. Organische hydrophobe Substanzen sind für diesen Zweck bekannte Erdalkalisalze von langkettigen Fettsäuren mit 12 bis 22 Kohlenstoffatomen, die Amide solcher Fettsäuren, Polyharnstoffe (G) und Wachse (H), sowie Mischungen aus diesen Feststoffen.

Bei den Mineralölen (A) kann es sich insbesondere um Brennöle, Mineraldichtungsöle, Naphthenöle und Paraffinöle handeln.

Bei den Siliconölen (C) kann es sich um lineare oder verzweigte Polysiloxane handeln, die Methyl- und/oder Hydroxyl-Endgruppen besitzen und bevorzugt eine Viskosität > 50 mPas, insbesondere bevorzugt eine Viskosität zwischen 100 mPas und 10000 mPas aufweisen.

Die Polyoxalkylene (D) können die allgemeine Form (D-1) haben:

R¹-{[(C₂H_{4-d}R'_{d}O)ₙ(CₓH₂ₓO)ᵣ(C₂H_{4-d}R"_{d}O)ₜ]-R²}_{z} (D-1)

wobei R¹ dem Rest eines Alkohols, Polyetherols oder Phenols R¹-H entspricht (das H gehört zur OH-Gruppe des Alkohols oder Phenols). Bei R¹-H handelt es sich bevorzugt um ein- oder mehrwertiger Polyetheralkohole oder Alkohole mit Molmassen von vorzugsweise 18 bis 2000 g/mol und 1 bis 8, bevorzugt 1 bis 4 Hydroxylgruppen. Beispielhaft seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri-und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, oder auf Naturstoffen basierende, Hydroxylgruppen tragende Verbindungen, genannt.

### Weiterhin sind

d 1 bis 3,
n ≥ 0,
x 2 bis 10, bevorzugt 2,5 bis 4,
r ≥ 0, bevorzugt 5 bis 350,
t ≥ 0,
n + r + t ≥ 1,
Z 1 bis 8, bevorzugt 1 bis 4, besonders bevorzugt 1 und 2, und
R' ein einwertiger aromatischer gegebenenfalls substituierter Kohlenwasserstoffrest,
R" ein Wasserstoffrest oder ein einwertiger Kohlenwasserstoffrest mit 1 bis 18 C-Atomen,
R² ein H-Atom, ein einwertiger organischer linearer oder verzweigter Alkylrest mit der Kettenlänge C₁-C₄₀ oder ein Carboxyrest eines gegebenenfalls verzweigten Alkyl- oder Arylesters.

Die Verbindungen können sowohl als Reinstoffe als auch in statistischer Mischung miteinander vorliegen, wobei die in den Formeln angegebenen Zahlenwerte dem Mittelwert der statistischen Verteilung des Wertes der Indices entsprechen.

Geeignete Polysiloxane (E) werden z.B. in DE10353856 und DE2829906 beschrieben, deren Offenbarungsgehalt vollumfänglich hiermit zum Bestandteil dieser Offenbarung wird. Diese können nachfolgende Struktur (E-1)haben, 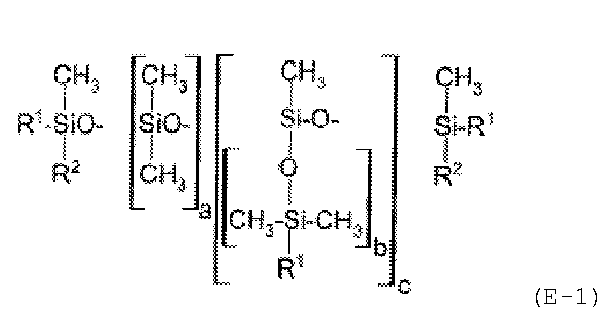 worin R¹ im durchschnittlichen Molekül gleich oder verschieden sein kann und einem gegebenenfalls Doppelbindungen enthaltenden und eventuell -OH funktionellen Kohlenwasserstoffrest mit 1 bis 14 Kohlenstoffatomen oder einem Rest -O-R* mit R* gleich einem Alkylrest mit 1, 2, 3 oder 4 Kohlenstoffatomen oder dem Rest -2-(CₙH₂ₙ-O)ₘR' entspricht, wobei
R' ein Wasserstoffrest oder ein Alkylrest mit 1 bis 8 Kohlenstoffatomen oder Acyl ist,
R² Phenyl, Ethyl, Methyl, Hydroxy, Amin mit mindestens 90% Methyl ist,
Z ein divalenter Rest der Formel -O-, -NH-, -NR³- mit R³=C₁₋₄-Alkylrest, -S-, -(CH₂)ₚ-O- oder -CH₂-CH(CH₃)-CH₂-O-mit p=2, 3, 4 ist,
n einen mittleren Zahlenwert von größer 2,5 bis 4,0,
m einen mittleren Zahlenwert von 5 bis 350,
a einen mittleren Zahlenwert von 4 bis 1500
b einen mittleren Zahlenwert von 0 bis 100,
c einen mittleren Zahlenwert von 0 bis 100 hat.

Geeignete modifizierte Polysiloxane sind ebenfalls Strukturen der Formel (E-2) 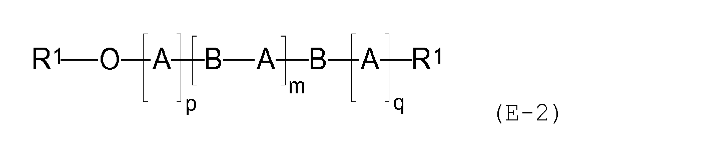 wobei der Rest A ein Polyoxyalkylenblock der durchschnittlichen Formel (E-2a) ist,

[C₂H_{4-d}R'_{d}O)ₙ(CₓH₂ₓO)ᵣ(C₂H_{4-d}R"_{d}O)ₜ] (E-2a)

wobei
d 1 bis 3,
n ≥ 0,
x 2 bis 10,
r ≥ 0,
t ≥ 0,
n + r + t ≥ 1,
sind und
R' ein einwertiger aromatischer gegebenenfalls substituierter Kohlenwasserstoffrest,
R" ein Wasserstoffrest oder ein einwertiger Kohlenwasserstoffrest mit 1 bis 18 C-Atomen,
R¹ ein H-Atom, ein einwertiger organischer linearer oder verzweigter Alkylrest mit der Kettenlänge C₁-C₄₀ oder ein Carboxyrest eines gegebenenfalls verzweigten Alkyl-oder Arylesters ist,
B ein Polysiloxanblock der durchschnittlichen Formel (E-2b) ist, 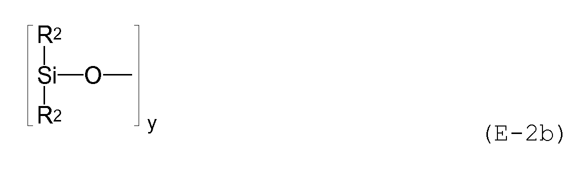 wobei
R² gleich oder verschieden ist und einen Alkylrest mit 1 bis 4 Kohlenstoffatomen oder einen Phenylrest umfasst und
y einen Wert von 5 bis 200,
m einen Wert von 2 bis 100,
p einen Wert von 0 oder 1 und
q einen Wert von 0 oder 1,
hat.

Geeignete modifizierte Polysiloxane sind auch Strukturen der Formel (E-3) 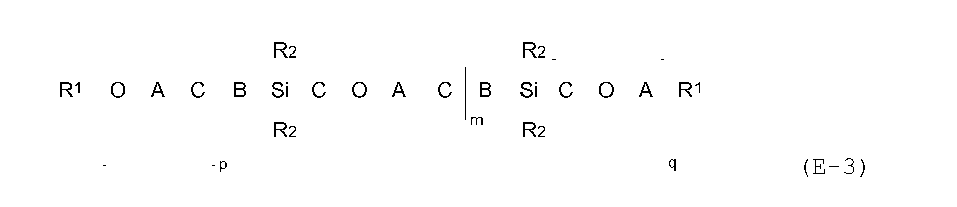 wobei die Reste
R¹, A, B und m, p und q die oben bei Struktur (E-2) genannte Bedeutung haben und
C ein linearer oder verzweigter Alkylenrest mit 2 bis 20 Kohlenstoffatomen ist.

Die Verbindungen können sowohl als Reinstoffe als auch in statistischer Mischung miteinander vorliegen, wobei die in den Formeln angegebenen Zahlenwerte dem Mittelwert der statistischen Verteilung des Wertes der Indices entsprechen.

Beispielhafte Harnstoffderivate (G) werden in DE 3245482 und DE 19917186 beschrieben. DE 19917186 gibt die allgemeine Formel (G-1) an: 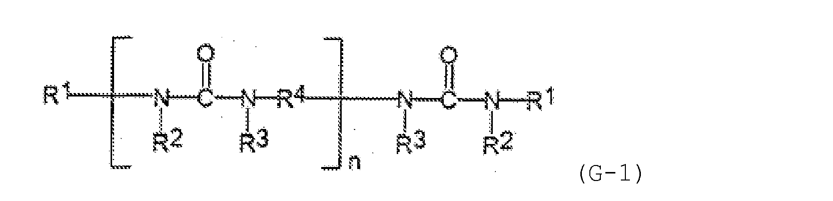 wobei R¹ ein Kohlenwasserstoffrest mit 4 bis 30 Kohlenstoffatomen oder ein Kohlenwasserstoffrest mit 4 bis 24 Kohlenstoffatomen und einem Stickstoffatom oder ein Kohlenwasserstoffrest mit 4 bis 30 Kohlenstoffatomen und einer Carbonylgruppe,
R² ein Wasserstoffatom oder ein Kohlenwasserstoffrest mit 1 bis 24 Kohlenstoffatomen,
R³ ein Wasserstoffatom oder ein Kohlenwasserstoffrest mit 1 bis 24 Kohlenstoffatomen,
R⁴ ein organischer Rest mit 2 bis 30 Kohlenstoffatomen und
n = 0 bis 5 sind.

Beispiele für die Wachse (H) sind Polyethylen-, Polyamidwachse oder deren Mischungen mit einem Schmelz- bzw. Erweichungspunkt oberhalb der Anwendungstemperatur.

Die erfindungsgemäßen Zusammensetzungen enthalten 80 bis 99, 999 Gew.-%, bevorzugt 90 bis 99,999 Gew. -%, insbesondere mindestens 95 Gew.-% und besonders bevorzugt mehr als 98 bis 99,999 Gew.-% einer oder mehrerer ionischen Flüssigkeiten,
sowie 0 bis 20 Gew.-%, bevorzugt 0 bis 10 Gew.-% und besonders bevorzugt 0 bis 5 Gew.-% Lösungsmittel,
sowie 0 bis 20 Gew.-%, bevorzugt 0 bis 10 Gew.-% und besonders bevorzugt 0 bis 5 Gew.-% an Hilfs- und Zusatzstoffen,
sowie 0,001 bis 10 Gew.-%, bevorzugt 0,001 bis 5 Gew.-% und besonders bevorzugt 0,05 bis 1 Gew.-% eines oder mehrerer erfindungsgemäßer Entschäumer,
wobei sich die Summe aller Komponenten der Zusammensetzung auf 100 Gew.-% addiert.

Weitere Gegenstände der Erfindung sind durch die Ansprüche gekennzeichnet.

Die erfindungsgemäßen Entschäumer und Zusammensetzungen zusammen mit ionischen Flüssigkeiten und deren Verwendung werden nachfolgend beispielhaft beschrieben, ohne dass d i e Erfindung als auf diese beispielhaften Ausführungsformen beschränkt angesehen sein soll.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

### Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

Die folgende Tabelle 1 zeigt beispielhaft die Basis der Wirkstoffe kommerziell verfügbarer Produkte zur Entschäumung wäßriger Systeme.

| **Produkt** | **Hydrophobes Öl** | **Hydrophobe Partikel** |
|---|---|---|
| Rüböl | B | - |
| Tegiloxan^{®} 1000 | C | - |
| GO^{®} Antifoam 2290 | A | H |
| TEGO^{®} Antifoam 3062 | E | F |
| TEGO^{®} Antifoam 7001 XP | E | F |
| TEGO^{®} Antifoam 793 | E | F |
| TEGO^{®} Antifoam KS 53 | B | F |
| TEGO^{®} Antifoam KE 600 | D | F |
| TEGO^{®} Antifoam KS 6 | A | F |
| TEGO^{®} Antifoam KS 911 | D | - |
| TEGO^{®} Antifoam MR 1015 | E | F |
| TEGO^{®} Antifoam MR 2101 | E | G |
| TEGO^{®} Antifoam MR 465 | E | - |
| TEGO^{®} Antifoam N | C | F |
| Tegopren^{®} 3158 | E | - |
| Tegopren^{®} 5851 | E | - |
| Paraffinisches Weißöl | A | - |

### Untersuchung mit ASTM Test D 892

Die folgenden Untersuchungen wurden mit den ionischen Flüssigkeiten TEGO^{®} IL IM ES (1-Methyl-3-ethylimidazoliumethylsulfat) und TEGO^{®} IL T 16 ES (Ethyl-bis(polyethoxy(8)ethyl)talgammoniumethylsulfat) durchgeführt.

Die entschäumende Wirkung wurde analog des ASTM Tests D 892 bei Raumtemperatur überprüft. Dazu wurden 200 ml der zu entschäumenden ionischen Flüssigkeit in einen Messzylinder der ASTM Apparatur gefüllt, der Zylinder wird mit einem gelochten Gummistopfen, durch den die Zuluftstange hindurchgeführt wurde und der Meßkörper befestigt wurde geschlossen. Eine definierte Menge Gas (N2-Gas, Pressluft oder durch Raumluft ggf. über eine Aquariumspumpe erzeugt) (90 ml/min) wird durch die Flüssigkeit hindurchgeleitet und Schaum erzeugt. Es muss darauf geachtet werden, dass der Messkörper mittig in dem Zylinder hängt. Nach 5 min wird die Schaumhöhe bestimmt und der Entschäumer mit Hilfe einer Pipette zudosiert. Der Schaumzerfall wird beobachtet und die entschäumende Wirkung wird nach weiteren 5 min beurteilt.

Die entschäumende Wirkung wird nach einer Notenskala wie folgt beurteilt:
Note 1: Schaumring bis max. 50 ml Schaum
Note 2: 50 ml - 100 ml Schaum
Note 3: 100 ml - max. Schaum

Die folgende Tabelle 2 fasst die Untersuchungsergebnisse zusammen.

| | **Frischwerte** | | **4 Wochen Lagerung** | |
|---|---|---|---|---|
| | TEGO^{®} IL IM ES | TEGO^{®} IL T 16 ES | TEGO^{®} IL IM ES | TEGO^{®} IL T 16 ES |
| Blindwert (ohne Entsch.) | 3 | 3 | 3 | 3 |
| TEGO® Antifoam MR 1015 | 1 | 1 | 1 | 1 |
| Rüböl | | 1 | | |
| TEGO^{®} Antifoam 793 | 1 | 1 | 1 | 1 |
| TEGO^{®} Antifoam 7001 XP | 1 | 1 | 1 | 1 |
| TEGOPREN® 3158 | 1 | 2 | 1 | 2 |
| Tegiloxan® 1000 | 1 | 1 | 1 | 1 |
| TEGO^{®} Antifoam KE 600 | 1 | 1 | 1 | 1 |
| TEGO^{®} Antifoam KS 6 | 1 | 1 | 1 | 1 |
| TEGO^{®} Antifoam 2290 | 1 | 1 | 1 | 1 |
| TEGO^{®} Antifoam 911 | 3 | 1 | 3 | 1 |
| TEGO^{®} Antifoam MR 465 | 3 | 1 | 3 | 1 |
| TEGO^{®} Antifoam 3062 | 1 | 1 | 1 | 1 |
| TEGO^{®} Antifoam N | 1 | 2 | 1 | 2 |
| Weißöl(Viskosität 25 mPas) | | 1 | | |

| **Fortsetzung Tabelle 2** | **Frischewerte** | | **4 Wochen Lagerung** | |
|---|---|---|---|---|
| | Zusatz von 5 % H₂O | | Zusatz von 10% H₂O | |
| | TEGO^{®} IL IM ES | TEGO^{®} IL T 16 ES | TEGO^{®} IL IM ES | TEGO^{®} IL T 16 ES |
| Blindwert (ohne Entsch.) | 3 | 3 | 3 | 3 |
| TEGO^{®} Antifoam MR 1015 | 1 | 1 | 1 | 1 |
| TEGO^{®} Antifoam 793 | 1 | 1 | 1 | 1 |
| TEGO^{®} Antifoam 7001 XP | | | | |
| TEGOPREN® 3158 | | | | |
| Tegiloxan® 1000 | 2 | 1 | 2 | 2 |
| TEGO^{®} Antifoam KE 600 | | | | |
| TEGO^{®} Antifoam KS 6 | 2 | 1 | 2 | 1 |
| TEGO^{®} Antifoam 2290 | | | | |
| TEGO^{®} Antifoam 911 | | | | |
| TEGO^{®} Antifoam 465 | | | | |
| TEGO^{®} Antifoam 3062 | | | | |
| TEGO^{®} Antifoam N | 1 | 1 | 1 | 1 |

Die Tabelle 2 zeigt, dass durch den Einsatz der Entschäumerkomponenten durchweg eine bessere Note (1-2) als bei der Blindprobe (3) erreicht werden kann. Die entschäumende Wirkung ist auch dann noch zu sehen, wenn die ionische Flüssigkeit Wasser enthält, das als Verunreinigung enthalten ist und/oder in technischen Prozessen entstehen kann.

### Untersuchung mit Schlagschaumgerät (DIN 53902/1)

Die folgenden Untersuchungen wurden mit der ionischen Flüssigkeit *Rewoquat*^{®} W *1* 8 (Di-nortallow-carboxyethyl)hydroxyethylmethylammoniummethylsulfat) durchgeführt.

Die Versuchsreihe wurde in einem 6-zylindrigen Schlagschaumgerät (DIN 53902/1) durchgeführt.

In den einzelnen Zylindern des Gerätes befinden sich Stempel aus Lochblech die bei Betrieb in schnelle Auf-und Abwärtsbewegungen versetzt werden. An der Außenseite der Zylinder befindet sich eine mL-Skala um die Füllhöhe vor und nach der Durchführung abzulesen. Die Anzahl der "Hübe" ist individuell einstellbar. Der Versuch wurde bei einer Temperatur von 60°C durchgeführt (Zylinder werden von Wasser umspült, mit Hilfe eines Thermostats kann geheizt werden). Die Testsubstanzen wurden auf 60 °C temperiert und in die Zylinder gefüllt. Die Zylinder wurden bis zur 250mL-Marke mit Produkt gefüllt und nach 100 Hüben des Stempels wurden die Füllstände abgelesen. Die Erhöhung des Volumens über 250 mL wird durch Bildung des Schaums durch die eingetragene Luft verursacht.

Es wurden zwei Versuchsreihen durchgeführt. In Reihe I wurden neben einer Probe mit reiner ionischen Flüssigkeit Rewoquat W 18 4 Proben mit jeweils 0,01 Gewichts-% unterschiedlicher erfindungsgemäßer Entschäumer untersucht. In einem zweiten Versuch wurde neben einer Probe mit reiner ionischen Flüssigkeit *Rewoquat*^{®} *W 18* die Entschäumermenge auf 0,05 Gewichts-% erhöht. Die Ergebnisse sind in der folgenden Tabelle 3 zusammengefasst.

| Ionische Flüssigkeit: *Rewoquat*^{®} *W 15* | **Füllhöhe nach 100 Hüben** (Ausgangshöhe 250mL) |
|---|---|
| Entschäumer | Versuchsreihe **I** (Einsatz von 0,01% Entschäumer) |
| Blindwert (kein Entschäumer) | 320 mL |
| TEGO^{®} Antifoam 793 | 260 mL |
| TEGO^{®} Antifoam 7001 XP | 260 mL |
| TEGOPREN^{®} 5851 | 280 mL |
| TEGO^{®} Antifoam MR 465 | 280 mL |

Man erkennt, dass bereits durch eine Zugabe von lediglich 0,01 Gewichts-% Entschäumer eine deutlich sichtbare Reduzierung des Schaumes gegenüber dem Blindwert erkennbar.

Eine Erhöhung der Entschäumermenge auf 0,05 Gewichts-% kann den Effekt gegebenenfalls noch verbessern, so wurde bei TEGO^{®} Antifoam 7001 XP eine Schaumhöhe von nur noch 250 mL gefunden).

## Patentansprüche

1. Zusammensetzung enthaltend mindestens 80 Gew.-% einer oder mehrerer ionischen Flüssigkeiten und mindestens einen Entschäumer und gegebenenfalls ein Lösungsmittel und/oder weitere sonstige Hilfs- oder Zusatzstoffe, wobei die Zusammensetzung frei von Keton-, Keton/Aldehyd- und/oder Harnstoff/Aldehyd-Harzen und/oder deren hydrierten Folgeprodukten ist.

2. Zusammensetzung nach Anspruch 1, **dadurch gekennzeichnet, dass** als Entschäumer hydrophobe, in Wasser unlösliche Öle und/oder hydrophobe Feststoffe und deren Mischungen verwendet werden.

3. Zusammensetzung nach zumindest einem der Ansprüche 1 bis 2, **dadurch gekennzeichnet, dass** als Entschäumer Mineralöle, Pflanzenöle, Siliconöle, Polyoxyalkylene, modifzierte Polysiloxane, Kieselsäurepartikel, Polyharnstoffpartikel oder Wachspartikel, und/oder Mischungen aus diesen Komponenten verwendet werden.

4. Zusammensetzung nach Anspruch 3, **dadurch gekennzeichnet, dass** die hydrophoben Entschäumer-Öle feinteilige, hydrophobe Partikel beinhalten.

5. Zusammensetzung nach Anspruch 3 oder Anspruch 4, wobei der Entschäumer weitere Additive und Emulgatoren enthält.

6. Zusammensetzung nach zumindest einem der Ansprüche 3 bis 5 **dadurch gekennzeichnet, dass** der Entschäumer unter Verwendung von üblichen Additiven, wie Emulgatoren, Verdickern, Schutzkolloiden und/oder Konservierungsstoffen in Wasser emulgiert wurde.

7. Zusammensetzung nach zumindest einem der Ansprüche 1 bis 6 **dadurch gekennzeichnet, dass** als Lösungsmittel organische Lösungsmittel oder Wasser und/oder deren Mischungen verwendet werden.

8. Zusammensetzung nach Anspruch 7, **dadurch gekennzeichnet, dass** das Lösungsmittel ein organisches Lösungsmittel ist.

9. Zusammensetzung nach Anspruch 3 oder Anspruch 4, **dadurch gekennzeichnet, dass** als Entschäumerölkomponente modifizierte Polysiloxane verwendet werden.

10. Zusammensetzung nach Anspruch 9, **dadurch gekennzeichnet, dass** das modifizierte Polysiloxan ein Polyethersiloxan ist.

11. Zusammensetzung nach Anspruch 9, **dadurch gekennzeichnet, dass** als modifizierte Polysiloxane Verbindungen der allgemeinen Formel (E-1), (E-2), (E-2a), (E-2b) oder (E-3) verwendet werden, 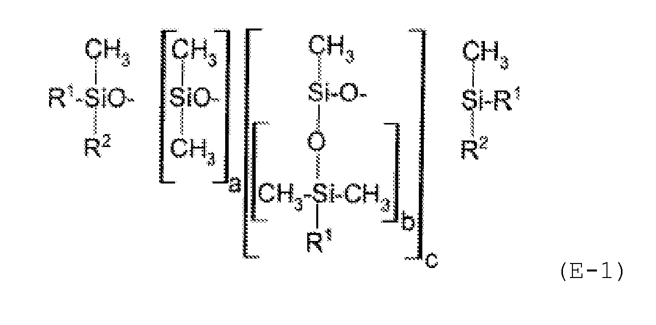 worin
R¹ im durchschnittlichen Molekül gleich oder verschieden sein kann und einem gegebenenfalls Doppelbindungen enthaltenden und eventuell -OH funktionellen Kohlenwasserstoffrest mit 1 bis 14 Kohlenstoffatomen oder einem Rest -O-R^{*} mit R^{*} gleich einem Alkylrest mit 1, 2, 3 oder 4 Kohlenstoffatomen oder dem Rest -Z-(CₙH₂ₙ-O)ₘR' entspricht, wobei
R' ein Wasserstoffrest oder ein Alkylrest mit 1 bis 8 Kohlenstoffatomen oder Acyl ist,
R² Phenyl, Ethyl, Methyl, Hydroxy, Amin mit mindestens 90 % Methyl ist, Z ein divalenter Rest der Formel -O-, -NH-, -NR³- mit R³ = C₁₋₄-Alkylrest, -S-, -(CH₂)ₚ-O- oder -CH₂- CH(CH₃)-CH₂-O- mit p = 2, 3, 4 ist,
n einen mittleren Zahlenwert von größer 2,5 bis 4,0,
m einen mittleren Zahlenwert von 5 bis 350,
a einen mittleren Zahlenwert von 4 bis 1500
b einen mittleren Zahlenwert von 0 bis 100,
c einen mittleren Zahlenwert von 0 bis 100 hat;
und (E-2) der Struktur 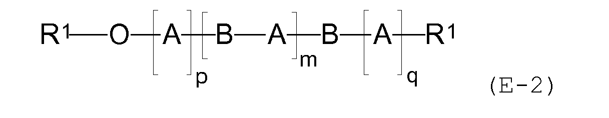 entspricht, wobei der Rest
A ein Polyoxyalkylenblock der durchschnittlichen Formel (E-2a) ist,
[(C₂H_{4-d}R'_{d}O)ₙ(CₓH₂ₓO)ᵣ(C₂H_{4-d}R"_{d}O)ₜ] (E-2a)
wobei
d 1 bis 3,
n ≥ 0,
x 2 bis 10,
r ≥ 0,
t ≥ 0,
n + r + t ≥ 1,
sind und
R' ein einwertiger aromatischer gegebenenfalls sub- stituierter Kohlenwasserstoffrest,
R" ein Wasserstoffrest oder ein einwertiger Kohlenwasserstoffrest mit 1 bis 18 C-Atomen,
R¹ ein H-Atom, ein einwertiger organischer linearer oder verzweigter Alkylrest mit der Kettenlänge C₁-C₄₀ oder ein Carboxyrest eines gegebenenfalls verzweigten Alkyl- oder Arylesters ist,
B ein Polysiloxanblock der durchschnittlichen Formel (E-2b) ist, 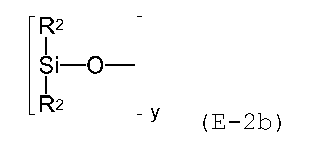
wobei
R² gleich oder verschieden ist und einen Alkylrest mit 1 bis 4 Kohlenstoffatomen oder einen Phenyl- rest umfasst und
y einen Wert von 5 bis 200,
m einen Wert von 2 bis 100,
p einen Wert von 0 oder 1 und
q einen Wert von 0 oder 1,
hat, oder
ein Polysiloxan der Struktur (E-3) 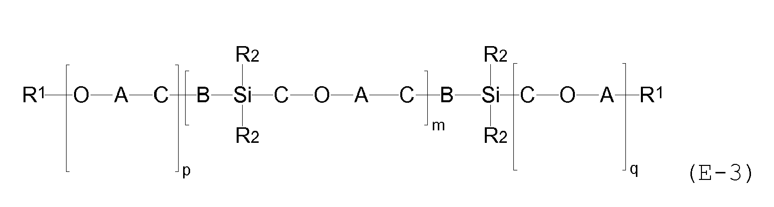 wobei die Reste
R¹, A, B und m, p und q die bei Struktur (E-2) genannte Bedeutung haben und
C ein linearer oder verzweigter Alkylenrest mit 2 bis 20 Kohlenstoffatomen ist.

12. Verwendung der Zusammensetzungen nach einem der Ansprüche 1 bis 11, in einem Verfahren zur Entschäumung von ionischen Flüssigkeiten.

13. Verwendung nach Anspruch 12 **dadurch gekennzeichnet, dass** die Zusammensetzungen als Schmierstoffe, Hydrauliköle, Thermalöle, in Trennprozessen, insbesondere Destillationsprozessen und/oder in Filtrationsprozessen, als Elektrolytflüssigkeiten, z.B. in Batterien, Supercaps, Solarzellen, bei der Metallabscheidung, beim Metallpolieren, als Absorbentien in Absorptionskälteprozessen, als Reinigungsflüssigkeiten, in Bioraffinerieprozessen, im Cellulosespinnverfahren und bei der Cellulosederivatisierung eingesetzt werden.
